# EUROPEAN PATENT APPLICATION

(11) **EP 4 580 120 A1**
(43) Date of publication of application: **02.07.2025**
(21) Application number: 23220499.0
(22) Date of filing: 28.12.2023
(51) Int. Cl.: H04L 9/40, H04W 48/00

(54) **RADIO EQUIPMENT REGULATORY COMPLIANCE HANDSHAKE**

(71) Applicant: INTEL Corporation, Santa Clara, CA 95054 (US)
(72) Inventor: MUECK, Markus Dominik, 82008 Unterhaching (DE)
(74) Representative: Viering, Jentschura & Partner mbB Patent- und Rechtsanwälte

(57) **Abstract**

An interface handshake is used to determine whether use of a particular network communication channel by a radio equipment (RE) device apparatus allows the RE device to remain in compliance with a regulatory standard for RE devices. The interface handshake includes a request for regulatory compliance information from a link partner device based on the regulatory standard and receiving response data to the request that identifies a set of attributes of the network communication channel or the link partner device. The RE device determines whether use of the network communication channel complies with the regulatory standard based on the set of attributes.

## Description

### FIELD

Various embodiments generally relate to the field of network communications, and particularly to dynamically establishing regulatory compliance of radio equipment in the field.

### BACKGROUND

Wireless communication networks may utilize different medium access schemes. For example, cellular networks utilized cellular access schemes, wireless local area network utilizes IEEE 802.11 standard and metropolitan area network (MAN) utilizes IEEE 802.16 standard. Different radio devices are used for each of these networks and may operate in different frequencies and/or different modulation schemes.

A wireless communication device that is able to operate in different networks may include plurality of separate radios for each wireless network. This wireless communication device may include a large number of internal connections, transmit/receive paths, amplifiers and antennas to implement interfaces of the device. Furthermore, the wireless communication device may include a fixed number of antennas and multiple inputs multiple outputs (MIMO) channels for each radio of the wireless communication device.

### BRIEF DESCRIPTION OF THE DRAWINGS

FIG. 1 is a simplified block diagram illustrating an example computing system network.
FIG. 2 is a simplified block diagram illustrating example operational layers within an example network.
FIG. 3 is a simplified block diagram illustrating services utilizing an example network.
FIG. 4 illustrates an example architecture of a system of a network, in accordance with various embodiments.
FIG. 5 illustrates an example of infrastructure equipment in accordance with various embodiments.
FIG. 6 illustrates an example of a platform or device in accordance with various embodiments.
FIG. 7 is a block diagram illustrating example interfaces of an example radio equipment (RE) device.
FIG. 8 is a block diagram illustrating an example interface handshake.
FIGS. 9A-9D are diagrams illustrating use of decision trees defining one or more regulatory standards for RE devices.
FIG. 10 is a simplified flow diagram illustrating an example technique for an RE device to assess potential network connections' compliance with regulatory requirements defined for the RE device using an interface handshake.

### DETAILED DESCRIPTION

The following detailed description refers to the accompanying drawings. The same reference numbers may be used in different drawings to identify the same or similar elements. In the following description, for purposes of explanation and not limitation, specific details are set forth such as particular structures, architectures, interfaces, techniques, etc. in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrase "A or B" means (A), (B), or (A and B).

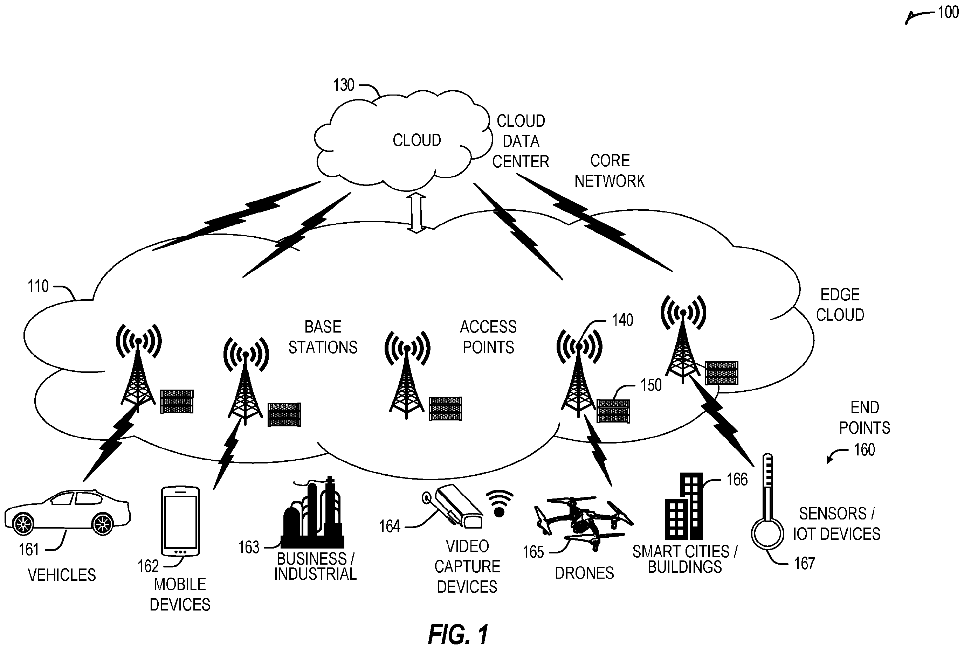

FIG. 1 is a block diagram 100 showing an overview of an example cloud system edge system, or other environment including one or more networks (e.g., 110). As shown, a system may include various network elements, such as an access point or base station 140, a local processing hub 150, or other system and thus may include multiple entities, devices, and equipment instances. The system may include a variety of entities, which may couple to the network 110, including a variety of data sources 160 (e.g., autonomous vehicles 161, user equipment 162, business and industrial equipment 163, video capture devices 164, drones 165, smart cities and building devices 166, sensors and loT devices 167, etc.). The networks 110 may be used to couple such data sources and devices to other remote resources, such as a cloud data center 130.

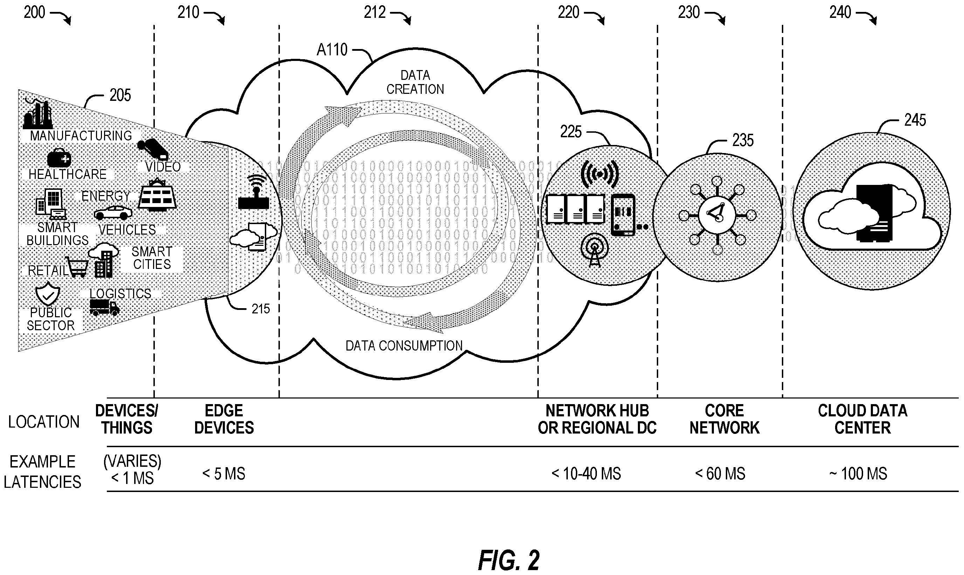

FIG. 2 illustrates operational layers among endpoints, a network (e.g., including edge computing devices), and cloud computing environments. Specifically, FIG. 2 depicts examples of computational use cases 205, utilizing multiple illustrative layers of network computing. The layers begin at an endpoint (devices and things) layer 200, which accesses the network 110 to conduct data creation, analysis, and data consumption activities. The network 110 may span multiple network layers, such as a devices layer 210 having gateways, on-premise servers, or network equipment (nodes 215) located in physically proximate systems; a network access layer 220, encompassing base stations, radio processing units, network hubs, regional data centers (DC), or local network equipment (equipment 225); and any equipment, devices, or nodes located therebetween (in layer 212, not illustrated in detail). The network communications within networks 110 and among the various layers may occur via any number of wired or wireless mediums, including via connectivity architectures and technologies not depicted.

Consistent with the examples provided herein, a client compute node may be embodied as any type of endpoint component, device, appliance, or other thing capable of communicating as a producer or consumer of data. Further, the label "node" or "device" as used in the Edge computing system does not necessarily mean that such node or device operates in a client or agent/minion/follower role; rather, any of the nodes or devices in the Edge computing system refer to individual entities, nodes, or subsystems which include discrete or connected hardware or software configurations to facilitate or use the Edge cloud 110.

As such, the Edge cloud 110 is formed from network components and functional features operated by and within Edge gateway nodes, Edge aggregation nodes, or other Edge compute nodes among network layers 210-230. The Edge cloud 110 thus may be embodied as any type of network that provides Edge computing and/or storage resources which are proximately located to radio access network (RAN) capable endpoint devices (e.g., mobile computing devices, loT devices, smart devices, etc.), which are discussed herein. In other words, the Edge cloud 110 may be envisioned as an "Edge" which connects the endpoint devices and traditional network access points that serve as an ingress point into service provider core networks, including mobile carrier networks (e.g., Global System for Mobile Communications (GSM) networks, Long-Term Evolution (LTE) networks, 5G/6G networks, etc.), while also providing storage and/or compute capabilities. Other types and forms of network access (e.g., Wi-Fi, long-range wireless, wired networks including optical networks, etc.) may also be utilized in place of or in combination with such 3GPP carrier networks.

The network components of the Edge cloud 110 may be servers, multi-tenant servers, appliance computing devices, and/or any other type of computing devices. For example, the Edge cloud 110 may include an appliance computing device that is a self-contained electronic device including a housing, a chassis, a case, or a shell. In some circumstances, the housing may be dimensioned for portability such that it can be carried by a human and/or shipped. Example housings may include materials that form one or more exterior surfaces that partially or fully protect contents of the appliance, in which protection may include weather protection, hazardous environment protection (e.g., electromagnetic interference (EMI), vibration, extreme temperatures, etc.), and/or enable submergibility. Example housings may include power circuitry to provide power for stationary and/or portable implementations, such as alternating current (AC) power inputs, direct current (DC) power inputs, AC/DC converter(s), DC/AC converter(s), DC/DC converter(s), power regulators, transformers, charging circuitry, batteries, wired inputs, and/or wireless power inputs. Example housings and/or surfaces thereof may include or connect to mounting hardware to enable attachment to structures such as buildings, telecommunication structures (e.g., poles, antenna structures, etc.), and/or racks (e.g., server racks, blade mounts, etc.). Example housings and/or surfaces thereof may support one or more sensors (e.g., temperature sensors, vibration sensors, light sensors, acoustic sensors, capacitive sensors, proximity sensors, infrared or other visual thermal sensors, etc.). One or more such sensors may be contained in, carried by, or otherwise embedded in the surface and/or mounted to the surface of the appliance. Example housings and/or surfaces thereof may support mechanical connectivity, such as propulsion hardware (e.g., wheels, rotors such as propellers, etc.) and/or articulating hardware (e.g., robot arms, pivotable appendages, etc.). In some circumstances, the sensors may include any type of input devices such as user interface hardware (e.g., buttons, switches, dials, sliders, microphones, etc.). In some circumstances, example housings include output devices contained in, carried by, embedded therein and/or attached thereto. Output devices may include displays, touchscreens, lights, light-emitting diodes (LEDs), speakers, input/output (I/O) ports (e.g., universal serial bus (USB)), etc. In some circumstances, Edge devices are devices presented in the network for a specific purpose (e.g., a traffic light), but may have processing and/or other capacities that may be utilized for other purposes. Such Edge devices may be independent from other networked devices and may be provided with a housing having a form factor suitable for its primary purpose; yet be available for other compute tasks that do not interfere with its primary task. Edge devices include Internet of Things devices. The appliance computing device may include hardware and software components to manage local issues such as device temperature, vibration, resource utilization, updates, power issues, physical and network security, etc. Example hardware for implementing an appliance computing device is described in conjunction with FIG. D1B. The Edge cloud 110 may also include one or more servers and/or one or more multi-tenant servers. Such a server may include an operating system and implement a virtual computing environment. A virtual computing environment may include a hypervisor managing (e.g., spawning, deploying, commissioning, destroying, decommissioning, etc.) one or more virtual machines, one or more containers, etc. Such virtual computing environments provide an execution environment in which one or more applications and/or other software, code, or scripts may execute while being isolated from one or more other applications, software, code, or scripts.

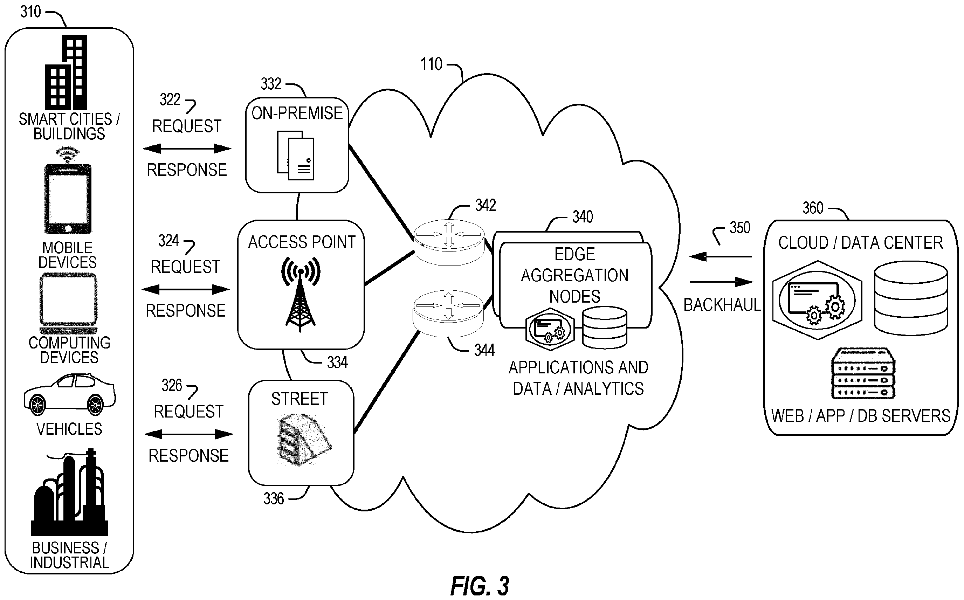

In FIG. 3, various client endpoints 310 (in the form of mobile devices, computers, autonomous vehicles, business computing equipment, industrial processing equipment) exchange requests and responses that are specific to the type of endpoint network aggregation. For instance, client endpoints 310 may obtain network access via a wired broadband network, by exchanging requests and responses 322 through an on-premise network system 332. Some client endpoints 310, such as mobile computing devices, may obtain network access via a wireless broadband network, by exchanging requests and responses 324 through an access point (e.g., a cellular network tower) 334. Some client endpoints 310, such as autonomous vehicles may obtain network access for requests and responses 326 via a wireless vehicular network through a streetlocated network system 336. However, regardless of the type of network access, the TSP may deploy aggregation points 342, 344 within the Edge cloud 110 to aggregate traffic and requests. Thus, within the Edge cloud 110, the TSP may deploy various compute and storage resources, such as at Edge aggregation nodes 340, to provide requested content. The Edge aggregation nodes 340 and other systems of the Edge cloud 110 are connected to a cloud or data center 360, which uses a backhaul network 350 to fulfill higher-latency requests from a cloud/data center for websites, applications, database servers, etc. Additional or consolidated instances of the Edge aggregation nodes 340 and the aggregation points 342, 344, including those deployed on a single server framework, may also be present within the Edge cloud 110 or other areas of the TSP infrastructure.

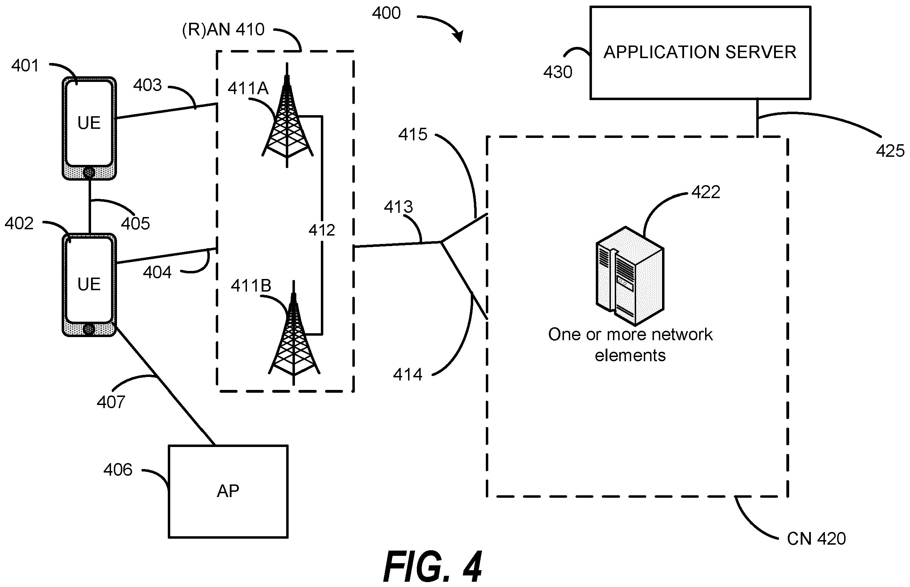

Some networks may utilize cellular data and communication networks, based on various radio technologies, including "new radio" technologies such as 5G and 6G, among other examples, and radio equipment devices (e.g., user equipment (UE), base station devices, access points, etc.) may utilize such technologies to communicate wirelessly and implement various applications. As an example illustration, FIG. 4 illustrates an example system 400 including UE 401a and UE 401b (collectively referred to as "UEs 401" or "UE 401"). In this example, UEs 401 are illustrated as smartphones (e.g., handheld touchscreen mobile computing devices connectable to one or more cellular networks), but may also comprise any mobile or non-mobile computing device, such as consumer electronics devices, cellular phones, smartphones, feature phones, tablet computers, wearable computer devices, personal digital assistants (PDAs), pagers, wireless handsets, desktop computers, laptop computers, in-vehicle infotainment (IVI), in-car entertainment (ICE) devices, an Instrument Cluster (IC), head-up display (HUD) devices, onboard diagnostic (OBD) devices, dashtop mobile equipment (DME), mobile data terminals (MDTs), Electronic Engine Management System (EEMS), electronic/engine control units (ECUs), electronic/engine control modules (ECMs), embedded systems, microcontrollers, control modules, engine management systems (EMS), networked or "smart" appliances, MTC devices, M2M, IoT devices, and/or the like.

In some embodiments, any of the UEs 401 may be loT UEs, which may comprise a network access layer designed for low-power loT applications utilizing short-lived UE connections. An loT UE can utilize technologies such as M2M or MTC for exchanging data with an MTC server or device via a PLMN, ProSe or D2D communication, sensor networks, or loT networks. The M2M or MTC exchange of data may be a machine-initiated exchange of data. An loT network describes interconnecting loT UEs, which may include uniquely identifiable embedded computing devices (within the Internet infrastructure), with short-lived connections. The loT UEs may execute background applications (e.g., keep-alive messages, status updates, etc.) to facilitate the connections of the loT network. In some of these embodiments, the UEs 401 may be NB-loT UEs 401. NB-loT provides access to network services using physical layer optimized for very low power consumption (e.g., full carrier BW is 180 kHz, subcarrier spacing can be 3.75 kHz or 15 kHz). A number of E-UTRA functions are not used for NB-loT and need not be supported by RAN nodes 411 and UEs 401 only using NB-loT. Examples of such E-UTRA functions may include inter-RAT mobility, handover, measurement reports, public warning functions, GBR, CSG, support of HeNBs, relaying, carrier aggregation, dual connectivity, NAICS, MBMS, real-time services, interference avoidance for in-device coexistence, RAN assisted WLAN interworking, sidelink communication/discovery, MDT, emergency call, CS fallback, selfconfiguration/self-optimization, among others. For NB-loT operation, a UE 401 operates in the DL using 12 sub-carriers with a sub-carrier BW of 15kHz, and in the UL using a single sub-carrier with a sub-carrier BW of either 3.75kHz or 15kHz or alternatively 3, 6 or 12 sub-carriers with a sub-carrier BW of 15kHz.

The UEs 401 may be configured to connect, for example, communicatively couple, with an or RAN 410. In embodiments, the RAN 410 may be an NG RAN or a 5G RAN, an E-UTRAN, an MF RAN, or a legacy RAN, such as a UTRAN or GERAN. As used herein, the term "NG RAN" or the like may refer to a RAN 410 that operates in an NR or 5G system 400, the term "E-UTRAN" or the like may refer to a RAN 410 that operates in an LTE or 4G system 400, and the term "MF RAN" or the like refers to a RAN 410 that operates in an MF system 400. The UEs 401 utilize connections (or channels) 403 and 404, respectively, each of which comprises a physical communications interface or layer (discussed in further detail below). The connections 403 and 404 may include several different physical DL channels and several different physical UL channels. As examples, the physical DL channels include the PDSCH, PMCH, PDCCH, EPDCCH, MPDCCH, R-PDCCH, SPDCCH, PBCH, PCFICH, PHICH, NPBCH, NPDCCH, NPDSCH, and/or any other physical DLchannels mentioned herein. As examples, the physical UL channels include the PRACH, PUSCH, PUCCH, SPUCCH, NPRACH, NPUSCH, and/or any other physical UL channels mentioned herein.

In this example, the connections 403 and 404 are illustrated as an air interface to enable communicative coupling, and can be consistent with cellular communications protocols, such as a GSM protocol, a CDMA network protocol, a PTT protocol, a POC protocol, a UMTS protocol, a 3GPP LTE protocol, a 5G protocol, a NR protocol, and/or any of the other communications protocols discussed herein. In embodiments, the UEs 401 may directly exchange communication data via a ProSe interface 405. The ProSe interface 405 may alternatively be referred to as a SL interface 405 and may comprise one or more physical and/or logical channels, including but not limited to the PSCCH, PSSCH, PSDCH, and PSBCH.

The UE 401b is shown to be configured to access an AP 406 (also referred to as "WLAN node 406," "WLAN 406," "WLAN Termination 406," "WT 406" or the like) via connection 407. The connection 407 can comprise a local wireless connection, such as a connection consistent with any IEEE 802.11 protocol, wherein the AP 406 would comprise a wireless fidelity (Wi-Fi^{®}) router. In this example, the AP 406 is shown to be connected to the Internet without connecting to the core network of the wireless system (described in further detail below). In various embodiments, the UE 401b, RAN 410, and AP 406 may be configured to utilize LWA operation and/or LWIP operation. The LWA operation may involve the UE 401b in RRC_CONNECTED being configured by a RAN node 411a-b to utilize radio resources of LTE and WLAN. LWIP operation may involve the UE 401b using WLAN radio resources (e.g., connection 407) via IPsec protocol tunneling to authenticate and encrypt packets (e.g., IP packets) sent over the connection 407. IPsec tunneling may include encapsulating the entirety of original IP packets and adding a new packet header, thereby protecting the original header of the IP packets.

The RAN 410 can include one or more AN nodes or RAN nodes 411a and 411b (collectively referred to as "RAN nodes 411" or "RAN node 411") that enable the connections 403 and 404. As used herein, the terms "access node," "access point," or the like may describe equipment that provides the radio baseband functions for data and/or voice connectivity between a network and one or more users. These access nodes can be referred to as BS, gNBs, gNodeBs, RAN nodes, eNBs, eNodeBs, NodeBs, RSUs, MF-APs, TRxPs or TRPs, and so forth, and can comprise ground stations (e.g., terrestrial access points) or satellite stations providing coverage within a geographic area (e.g., a cell). As used herein, the term "NG RAN node" or the like may refer to a RAN node 411 that operates in an NR or 5G system 400 (e.g., a gNB), and the term "E-UTRAN node" or the like may refer to a RAN node 411 that operates in an LTE or 4G system 400 (e.g., an eNB). According to various embodiments, the RAN nodes 411 may be implemented as one or more of a dedicated physical device such as a macrocell base station, and/or a low power (LP) base station for providing femtocells, picocells or other like cells having smaller coverage areas, smaller user capacity, or higher BW compared to macrocells.

In V2X scenarios one or more of the RAN nodes 411 may be or act as RSUs. The term "Road Side Unit" or "RSU" may refer to any transportation infrastructure entity used for V2X communications. An RSU may be implemented in or by a suitable RAN node or a stationary (or relatively stationary) UE, where an RSU implemented in or by a UE may be referred to as a "UE-type RSU," an RSU implemented in or by an eNB may be referred to as an "eNB-type RSU," an RSU implemented in or by a gNB may be referred to as a "gNB-type RSU," and the like. In one example, an RSU is a computing device coupled with radio frequency circuitry located on a roadside that provides connectivity support to passing vehicle UEs 401 (vUEs 401). The RSU may also include internal data storage circuitry to store intersection map geometry, traffic statistics, media, as well as applications/software to sense and control ongoing vehicular and pedestrian traffic. The RSU may operate on the 5.9 GHz Direct Short Range Communications (DSRC) band to provide very low latency communications required for high speed events, such as crash avoidance, traffic warnings, and the like. Additionally or alternatively, the RSU may operate on the cellular V2X band to provide the aforementioned low latency communications, as well as other cellular communications services. Additionally or alternatively, the RSU may operate as a Wi-Fi hotspot (2.4 GHz band) and/or provide connectivity to one or more cellular networks to provide uplink and downlink communications. The computing device(s) and some or all of the radiofrequency circuitry of the RSU may be packaged in a weatherproof enclosure suitable for outdoor installation, and may include a network interface controller to provide a wired connection (e.g., Ethernet) to a traffic signal controller and/or a backhaul network.

Any of the RAN nodes 411 can terminate the air interface protocol and can be the first point of contact for the UEs 401. In some embodiments, any of the RAN nodes 411 can fulfill various logical functions for the RAN 410 including, but not limited to, radio network controller (RNC) functions such as radio bearer management, uplink and downlink dynamic radio resource management and data packet scheduling, and mobility management.

According to various embodiments, the UEs 401 and the RAN nodes 411 communicate data (for example, transmit and receive) data over a licensed medium (also referred to as the "licensed spectrum" and/or the "licensed band") and an unlicensed shared medium (also referred to as the "unlicensed spectrum" and/or the "unlicensed band"). The licensed spectrum may include channels that operate in the frequency range of approximately 400 MHz to approximately 3.8 GHz, whereas the unlicensed spectrum may include the 5 GHz band.

To operate in the unlicensed spectrum, the UEs 401 and the RAN nodes 411 may operate using LAA, eLAA, and/or feLAA mechanisms. In these implementations, the UEs 401 and the RAN nodes 411 may perform one or more known medium-sensing operations and/or carriersensing operations in order to determine whether one or more channels in the unlicensed spectrum is unavailable or otherwise occupied prior to transmitting in the unlicensed spectrum. The medium/carrier sensing operations may be performed according to a listen-before-talk (LBT) protocol.

LBT is a mechanism whereby equipment (for example, UEs 401 RAN nodes 411, etc.) senses a medium (for example, a channel or carrier frequency) and transmits when the medium is sensed to be idle (or when a specific channel in the medium is sensed to be unoccupied). The medium sensing operation may include CCA, which utilizes at least ED to determine the presence or absence of other signals on a channel in order to determine if a channel is occupied or clear. This LBT mechanism allows cellular/LAA networks to coexist with incumbent systems in the unlicensed spectrum and with other LAA networks. ED may include sensing RF energy across an intended transmission band for a period of time and comparing the sensed RF energy to a predefined or configured threshold. Typically, the incumbent systems in the 5 GHz band are WLANs based on IEEE 802.11 technologies. WLAN employs a contentionbased channel access mechanism, called CSMA/CA. Here, when a WLAN node (e.g., a mobile station (MS) such as UE 401, AP 406, or the like) intends to transmit, the WLAN node may first perform CCA before transmission. Additionally, a backoff mechanism is used to avoid collisions in situations where more than one WLAN node senses the channel as idle and transmits at the same time, among other example features.

The RAN 410 is shown to be communicatively coupled to a core network-in this embodiment, CN 420. The CN 420 may comprise a plurality of network elements 422, which are configured to offer various data and telecommunications services to customers/subscribers (e.g., users of UEs 401) who are connected to the CN 420 via the RAN 410. The components of the CN 420 may be implemented in one physical node or separate physical nodes including components to read and execute instructions from a machine-readable or computer-readable medium (e.g., a non-transitory machine-readable storage medium).

Generally, the application server 430 may be an element offering applications that use IP bearer resources with the core network (e.g., UMTS PS domain, LTE PS data services, etc.). The application server 430 can also be configured to support one or more communication services (e.g., VoIP sessions, PTT sessions, group communication sessions, social networking services, etc.) for the UEs 401 via the EPC 420.

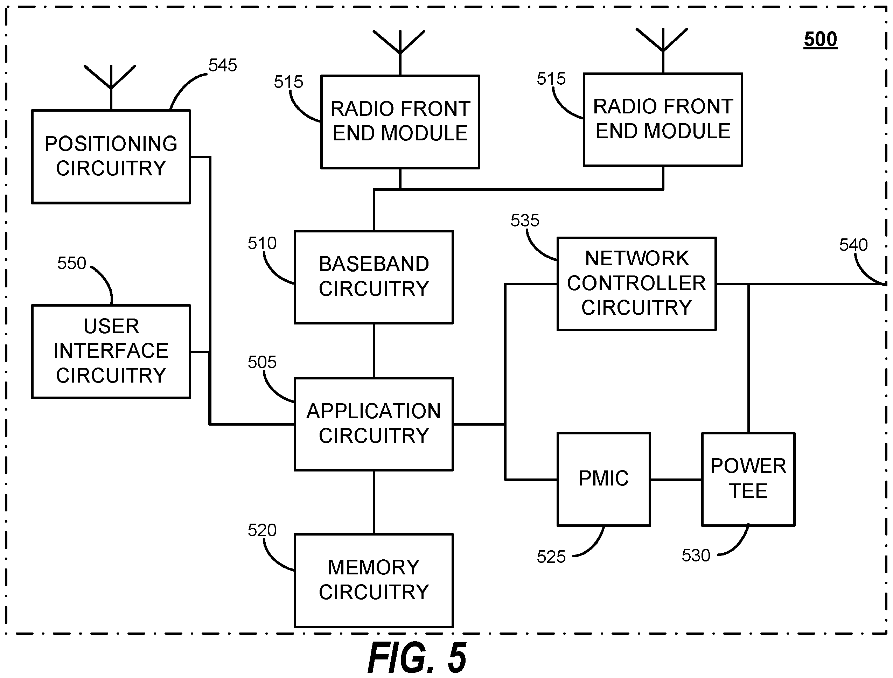

FIG. 5 illustrates an example of infrastructure equipment 500 in accordance with various embodiments. The infrastructure equipment 500 (or "system 500") may be implemented as a base station, radio head, RAN node such as the RAN nodes 411 and/or AP 406 shown and described previously, application server(s) 430, and/or any other element/device discussed herein. In other examples, the system 500 could be implemented in or by a UE.

The system 500 includes application circuitry 505, baseband circuitry 510, one or more radio front end modules (RFEMs) 515, memory circuitry 520, power management integrated circuitry (PMIC) 525, power tee circuitry 530, network controller circuitry 535, network interface connector 540, satellite positioning circuitry 545, and user interface 550. In some embodiments, the device 500 may include additional elements such as, for example, memory/storage, display, camera, sensor, or input/output (I/O) interface. In other embodiments, the components described below may be included in more than one device. For example, said circuitries may be separately included in more than one device for CRAN, vBBU, or other like implementations.

Application circuitry 505 includes circuitry such as, but not limited to one or more processors (or processor cores), cache memory, and one or more of low drop-out voltage regulators (LDOs), interrupt controllers, serial interfaces such as SPI, I2C or universal programmable serial interface module, real time clock (RTC), timer-counters including interval and watchdog timers, general purpose input/output (I/O or IO), memory card controllers such as Secure Digital (SD) MultiMediaCard (MMC) or similar, Universal Serial Bus (USB) interfaces, Mobile Industry Processor Interface (MIPI) interfaces and Joint Test Access Group (JTAG) test access ports. The processors (or cores) of the application circuitry 505 may be coupled with or may include memory/storage elements and may be configured to execute instructions stored in the memory/storage to enable various applications or operating systems to run on the system 500. In some implementations, the memory/storage elements may be on-chip memory circuitry, which may include any suitable volatile and/or non-volatile memory, such as DRAM, SRAM, EPROM, EEPROM, Flash memory, solid-state memory, and/or any other type of memory device technology, such as those discussed herein.

The processor(s) of application circuitry 505 may include, for example, one or more processor cores (CPUs), one or more application processors, one or more graphics processing units (GPUs), one or more reduced instruction set computing (RISC) processors, one or more Acorn RISC Machine (ARM) processors, one or more complex instruction set computing (CISC) processors, one or more digital signal processors (DSP), one or more FPGAs, one or more PLDs, one or more ASICs, one or more microprocessors or controllers, or any suitable combination thereof. In some embodiments, the application circuitry 505 may comprise, or may be, a special-purpose processor/controller to operate according to the various embodiments herein. As examples, the processor(s) of application circuitry 505 may include one or more Intel Pentium^{®}, Core^{®}, or Xeon^{®} processor(s); Advanced Micro Devices (AMD) Ryzen^{®} processor(s), Accelerated Processing Units (APUs), or Epyc^{®} processors; ARM-based processor(s) licensed from ARM Holdings, Ltd. such as the ARM Cortex-A family of processors and the ThunderX2^{®} provided by Cavium(TM), Inc.; a MIPS-based design from MIPS Technologies, Inc. such as MIPS Warrior P-class processors; and/or the like. In some embodiments, the system 500 may not utilize application circuitry 505, and instead may include a special-purpose processor/controller to process IP data received from an EPC or 5GC, for example.

In some implementations, the application circuitry 505 may include one or more hardware accelerators, which may be microprocessors, programmable processing devices, or the like. The one or more hardware accelerators may include, for example, computer vision (CV) and/or deep learning (DL) accelerators. As examples, the programmable processing devices may be one or more a field-programmable devices (FPDs) such as field-programmable gate arrays (FPGAs) and the like; programmable logic devices (PLDs) such as complex PLDs (CPLDs), high-capacity PLDs (HCPLDs), and the like; ASICs such as structured ASICs and the like; programmable SoCs (PSoCs); and the like. In such implementations, the circuitry of application circuitry 505 may comprise logic blocks or logic fabric, and other interconnected resources that may be programmed to perform various functions, such as the procedures, methods, functions, etc. of the various embodiments discussed herein. In such embodiments, the circuitry of application circuitry 505 may include memory cells (e.g., erasable programmable read-only memory (EPROM), electrically erasable programmable read-only memory (EEPROM), flash memory, static memory (e.g., static random access memory (SRAM), anti-fuses, etc.)) used to store logic blocks, logic fabric, data, etc. in look-up-tables (LUTs) and the like.

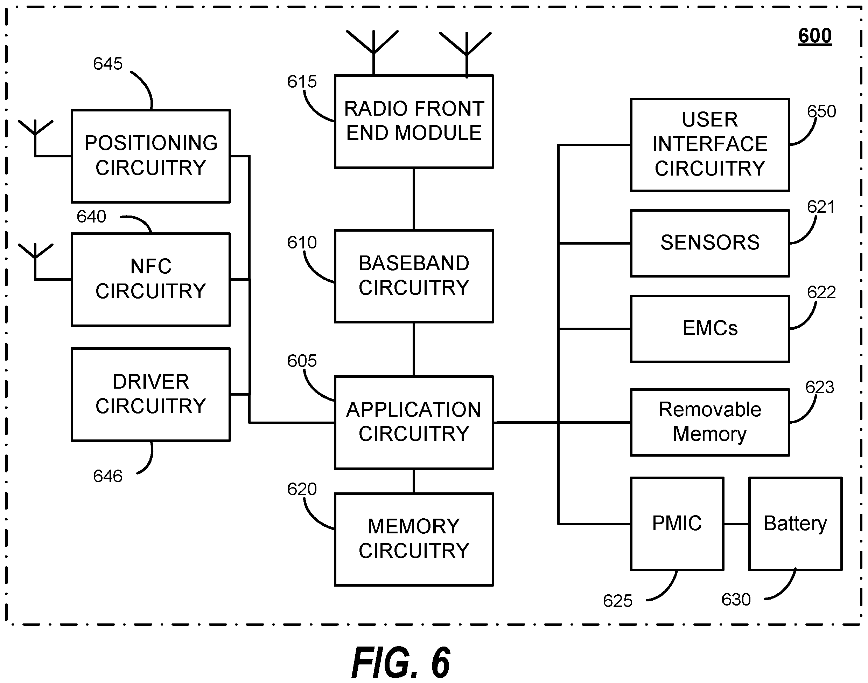

The baseband circuitry 510 may be implemented, for example, as a solder-down substrate including one or more integrated circuits, a single packaged integrated circuit soldered to a main circuit board or a multi-chip module containing two or more integrated circuits. The various hardware electronic elements of baseband circuitry 510 are discussed infra with regard to FIG. 6.

User interface circuitry 550 may include one or more user interfaces designed to enable user interaction with the system 500 or peripheral component interfaces designed to enable peripheral component interaction with the system 500. User interfaces may include, but are not limited to, one or more physical or virtual buttons (e.g., a reset button), one or more indicators (e.g., light emitting diodes (LEDs)), a physical keyboard or keypad, a mouse, a touchpad, a touchscreen, speakers or other audio emitting devices, microphones, a printer, a scanner, a headset, a display screen or display device, etc. Peripheral component interfaces may include, but are not limited to, a nonvolatile memory port, a universal serial bus (USB) port, an audio jack, a power supply interface, etc.

The radio front end modules (RFEMs) 515 may comprise a millimeter wave (mmWave) RFEM and one or more sub-mmWave radio frequency integrated circuits (RFICs). In some implementations, the one or more sub-mmWave RFICs may be physically separated from the mmWave RFEM. The RFICs may include connections to one or more antennas or antenna arrays (see e.g., antenna array 6111 of FIG. 6infra), and the RFEM may be connected to multiple antennas. In alternative implementations, both mmWave and sub-mmWave radio functions may be implemented in the same physical RFEM 515, which incorporates both mmWave antennas and sub-mmWave.

The memory circuitry 520 may include one or more of volatile memory including dynamic random access memory (DRAM) and/or synchronous dynamic random access memory (SDRAM), and nonvolatile memory (NVM) including high-speed electrically erasable memory (commonly referred to as Flash memory), phase change random access memory (PRAM), magnetoresistive random access memory (MRAM), etc., and may incorporate the three-dimensional (3D) cross-point (XPOINT) memories from Intel^{®} and Micron^{®}. Memory circuitry 520 may be implemented as one or more of solder down packaged integrated circuits, socketed memory modules and plug-in memory cards.

The PMIC 525 may include voltage regulators, surge protectors, power alarm detection circuitry, and one or more backup power sources such as a battery or capacitor. The power alarm detection circuitry may detect one or more of brown out (under-voltage) and surge (over-voltage) conditions. The power tee circuitry 530 may provide for electrical power drawn from a network cable to provide both power supply and data connectivity to the infrastructure equipment 500 using a single cable.

The network controller circuitry 535 may provide connectivity to a network using a standard network interface protocol such as Ethernet, Ethernet over GRE Tunnels, Ethernet over Multiprotocol Label Switching (MPLS), or some other suitable protocol. Network connectivity may be provided to/from the infrastructure equipment 500 via network interface connector 540 using a physical connection, which may be electrical (commonly referred to as a "copper interconnect"), optical, or wireless. The network controller circuitry 535 may include one or more dedicated processors and/or FPGAs to communicate using one or more of the aforementioned protocols. In some implementations, the network controller circuitry 535 may include multiple controllers to provide connectivity to other networks using the same or different protocols.

The positioning circuitry 545 includes circuitry to receive and decode signals transmitted/broadcasted by a positioning network of a global navigation satellite system (GNSS). Examples of navigation satellite constellations (or GNSS) include United States' Global Positioning System (GPS), Russia's Global Navigation System (GLONASS), the European Union's Galileo system, China's BeiDou Navigation Satellite System, a regional navigation system or GNSS augmentation system (e.g., Navigation with Indian Constellation (NAVIC), Japan's Quasi-Zenith Satellite System (QZSS), France's Doppler Orbitography and Radio-positioning Integrated by Satellite (DORIS), etc.), or the like. The positioning circuitry 545 comprises various hardware elements (e.g., including hardware devices such as switches, filters, amplifiers, antenna elements, and the like to facilitate OTA communications) to communicate with components of a positioning network, such as navigation satellite constellation nodes. In some embodiments, the positioning circuitry 545 may include a Micro-Technology for Positioning, Navigation, and Timing (Micro-PNT) IC that uses a master timing clock to perform position tracking/estimation without GNSS assistance. The positioning circuitry 545 may also be part of, or interact with, the baseband circuitry 510 and/or RFEMs 515 to communicate with the nodes and components of the positioning network. The positioning circuitry 545 may also provide position data and/or time data to the application circuitry 505, which may use the data to synchronize operations with various infrastructure (e.g., RAN nodes 411, etc.), or the like.

The components shown by FIG. 5 may communicate with one another using interface circuitry, which may include any number of bus and/or interconnect (IX) technologies such as industry standard architecture (ISA), extended ISA (EISA), peripheral component interconnect (PCI), peripheral component interconnect extended (PClx), PCI express (PCIe), or any number of other technologies. The bus/IX may be a proprietary bus, for example, used in a SoC based system. Other bus/IX systems may be included, such as an I2C interface, an SPI interface, point to point interfaces, and a power bus, among others.

FIG. 6 illustrates an example of a platform 600 (or "device 600") in accordance with various embodiments. In embodiments, the computer platform 600 may be suitable for use as UEs 401, application servers 430, and/or any other element/device discussed herein. The platform 600 may include any combinations of the components shown in the example. The components of platform 600 may be implemented as integrated circuits (ICs), portions thereof, discrete electronic devices, or other modules, logic, hardware, software, firmware, or a combination thereof adapted in the computer platform 600, or as components otherwise incorporated within a chassis of a larger system. The block diagram of FIG. 6 is intended to show a high level view of components of the computer platform 600. However, some of the components shown may be omitted, additional components may be present, and different arrangement of the components shown may occur in other implementations.

Application circuitry 605 includes circuitry such as, but not limited to one or more processors (or processor cores), cache memory, and one or more of LDOs, interrupt controllers, serial interfaces such as SPI, I2C or universal programmable serial interface module, RTC, timer-counters including interval and watchdog timers, general purpose I/O, memory card controllers such as SD MMC or similar, USB interfaces, MIPI interfaces, and JTAG test access ports. The processors (or cores) of the application circuitry 605 may be coupled with or may include memory/storage elements and may be configured to execute instructions stored in the memory/storage to enable various applications or operating systems to run on the system 600. In some implementations, the memory/storage elements may be on-chip memory circuitry, which may include any suitable volatile and/or non-volatile memory, such as DRAM, SRAM, EPROM, EEPROM, Flash memory, solid-state memory, and/or any other type of memory device technology, such as those discussed herein.

The processor(s) of application circuitry 505 may include, for example, one or more processor cores, one or more application processors, one or more GPUs, one or more RISC processors, one or more ARM processors, one or more CISC processors, one or more DSP, one or more FPGAs, one or more PLDs, one or more ASICs, one or more microprocessors or controllers, a multithreaded processor, an ultra-low voltage processor, an embedded processor, some other known processing element, or any suitable combination thereof. In some embodiments, the application circuitry 505 may comprise, or may be, a special-purpose processor/controller to operate according to the various embodiments herein.

As examples, the processor(s) of application circuitry 605 may include an Intel^{®} Architecture Core^{™} based processor, such as a Quark^{™}, an Atom^{™}, an i3, an i5, an i7, or an MCU-class processor, or another such processor available from Intel^{®} Corporation, Santa Clara, CA. The processors of the application circuitry 605 may also be one or more of Advanced Micro Devices (AMD) Ryzen^{®} processor(s) or Accelerated Processing Units (APUs); A5-A9 processor(s) from Apple^{®} Inc., Snapdragon^{™} processor(s) from Qualcomm^{®} Technologies, Inc., Texas Instruments, Inc.^{®} Open Multimedia Applications Platform (OMAP)^{™} processor(s); a MIPS-based design from MIPS Technologies, Inc. such as MIPS Warrior M-class, Warrior I-class, and Warrior P-class processors; an ARM-based design licensed from ARM Holdings, Ltd., such as the ARM Cortex-A, Cortex-R, and Cortex-M family of processors; or the like. In some implementations, the application circuitry 605 may be a part of a system on a chip (SoC) in which the application circuitry 605 and other components are formed into a single integrated circuit, or a single package, such as the Edison^{™} or Galileo^{™} SoC boards from Intel^{®} Corporation.

Additionally or alternatively, application circuitry 605 may include circuitry such as, but not limited to, one or more a field-programmable devices (FPDs) such as FPGAs and the like; programmable logic devices (PLDs) such as complex PLDs (CPLDs), high-capacity PLDs (HCPLDs), and the like; ASICs such as structured ASICs and the like; programmable SoCs (PSoCs); and the like. In such embodiments, the circuitry of application circuitry 605 may comprise logic blocks or logic fabric, and other interconnected resources that may be programmed to perform various functions, such as the procedures, methods, functions, etc. of the various embodiments discussed herein. In such embodiments, the circuitry of application circuitry 605 may include memory cells (e.g., erasable programmable read-only memory (EPROM), electrically erasable programmable read-only memory (EEPROM), flash memory, static memory (e.g., static random access memory (SRAM), anti-fuses, etc.)) used to store logic blocks, logic fabric, data, etc. in look-up tables (LUTs) and the like.

The baseband circuitry 610 may be implemented, for example, as a solder-down substrate including one or more integrated circuits, a single packaged integrated circuit soldered to a main circuit board or a multi-chip module containing two or more integrated circuits. The various hardware electronic elements of baseband circuitry 610 are discussed infra with regard to FIG. 6.

The RFEMs 615 may comprise a millimeter wave (mmWave) RFEM and one or more sub-mmWave radio frequency integrated circuits (RFICs). In some implementations, the one or more sub-mmWave RFICs may be physically separated from the mmWave RFEM. The RFICs may include connections to one or more antennas or antenna arrays (see e.g., antenna array 611 of FIG. 6infra), and the RFEM may be connected to multiple antennas. In alternative implementations, both mmWave and sub-mmWave radio functions may be implemented in the same physical RFEM 615, which incorporates both mmWave antennas and sub-mmWave.

The memory circuitry 620 may include any number and type of memory devices used to provide for a given amount of system memory. As examples, the memory circuitry 620 may include one or more of volatile memory including random access memory (RAM), dynamic RAM (DRAM) and/or synchronous dynamic RAM (SDRAM), and nonvolatile memory (NVM) including high-speed electrically erasable memory (commonly referred to as Flash memory), phase change random access memory (PRAM), magnetoresistive random access memory (MRAM), etc. The memory circuitry 620 may be developed in accordance with a Joint Electron Devices Engineering Council (JEDEC) low power double data rate (LPDDR)-based design, such as LPDDR2, LPDDR3, LPDDR4, or the like. Memory circuitry 620 may be implemented as one or more of solder down packaged integrated circuits, single die package (SDP), dual die package (DDP) or quad die package (Q17P), socketed memory modules, dual inline memory modules (DIMMs) including microDIMMs or MiniDIMMs, and/or soldered onto a motherboard via a ball grid array (BGA). In low power implementations, the memory circuitry 620 may be on-die memory or registers associated with the application circuitry 605. To provide for persistent storage of information such as data, applications, operating systems and so forth, memory circuitry 620 may include one or more mass storage devices, which may include, inter alia, a solid state disk drive (SSDD), hard disk drive (HDD), a micro HDD, resistance change memories, phase change memories, holographic memories, or chemical memories, among others. For example, the computer platform 600 may incorporate the three-dimensional (3D) cross-point (XPOINT) memories from Intel^{®} and Micron^{®}.

Removable memory circuitry 623 may include devices, circuitry, enclosures/housings, ports, or receptacles, etc. used to couple portable data storage devices with the platform 600. These portable data storage devices may be used for mass storage purposes, and may include, for example, flash memory cards (e.g., Secure Digital (SD) cards, microSD cards, xD picture cards, and the like), and USB flash drives, optical discs, external HDDs, and the like.

The platform 600 may also include interface circuitry (not shown) that is used to connect external devices with the platform 600. The external devices connected to the platform 600 via the interface circuitry include sensor circuitry 621 and electro-mechanical components (EMCs) 622, as well as removable memory devices coupled to removable memory circuitry 623.

The sensor circuitry 621 includes devices, modules, or subsystems whose purpose is to detect events or changes in its environment and send the information (sensor data) about the detected events to some other a device, module, subsystem, etc. Examples of such sensors include, inter alia, inertia measurement units (IMUs) comprising accelerometers, gyroscopes, and/or magnetometers; microelectromechanical systems (MEMS) or nanoelectromechanical systems (NEMS) comprising 3-axis accelerometers, 3-axis gyroscopes, and/or magnetometers; level sensors; flow sensors; temperature sensors (e.g., thermistors); pressure sensors; barometric pressure sensors; gravimeters; altimeters; image capture devices (e.g., cameras or lensless apertures); light detection and ranging (LiDAR) sensors; proximity sensors (e.g., infrared radiation detector and the like), depth sensors, ambient light sensors, ultrasonic transceivers; microphones or other like audio capture devices; etc.

EMCs 622 include devices, modules, or subsystems whose purpose is to enable platform 600 to change its state, position, and/or orientation, or move or control a mechanism or (sub)system. Additionally, EMCs 622 may be configured to generate and send messages/signaling to other components of the platform 600 to indicate a current state of the EMCs 622. Examples of the EMCs 622 include one or more power switches, relays including electromechanical relays (EMRs) and/or solid state relays (SSRs), actuators (e.g., valve actuators, etc.), an audible sound generator, a visual warning device, motors (e.g., DC motors, stepper motors, etc.), wheels, thrusters, propellers, claws, clamps, hooks, and/or other like electromechanical components. In embodiments, platform 600 is configured to operate one or more EMCs 622 based on one or more captured events and/or instructions or control signals received from a service provider and/or various clients.

In some implementations, the interface circuitry may connect the platform 600 with positioning circuitry 645. The positioning circuitry 645 includes circuitry to receive and decode signals transmitted/broadcasted by a positioning network of a GNSS. Examples of navigation satellite constellations (or GNSS) include United States' GPS, Russia's GLONASS, the European Union's Galileo system, China's BeiDou Navigation Satellite System, a regional navigation system or GNSS augmentation system (e.g., NAVIC), Japan's QZSS, France's DORIS, etc.), or the like. The positioning circuitry 645 comprises various hardware elements (e.g., including hardware devices such as switches, filters, amplifiers, antenna elements, and the like to facilitate OTA communications) to communicate with components of a positioning network, such as navigation satellite constellation nodes. In some embodiments, the positioning circuitry 645 may include a Micro-PNT IC that uses a master timing clock to perform position tracking/estimation without GNSS assistance. The positioning circuitry 645 may also be part of, or interact with, the baseband circuitry 410 and/or RFEMs 615 to communicate with the nodes and components of the positioning network. The positioning circuitry 645 may also provide position data and/or time data to the application circuitry 605, which may use the data to synchronize operations with various infrastructure (e.g., radio base stations), for turn-by-turn navigation applications, or the like
In some implementations, the interface circuitry may connect the platform 600 with Near-Field Communication (NFC) circuitry 640. NFC circuitry 640 is configured to provide contactless, short-range communications based on radio frequency identification (RFID) standards, wherein magnetic field induction is used to enable communication between NFC circuitry 640 and NFC-enabled devices external to the platform 600 (e.g., an "NFC touchpoint"). NFC circuitry 640 comprises an NFC controller coupled with an antenna element and a processor coupled with the NFC controller. The NFC controller may be a chip/IC providing NFC functionalities to the NFC circuitry 640 by executing NFC controller firmware and an NFC stack. The NFC stack may be executed by the processor to control the NFC controller, and the NFC controller firmware may be executed by the NFC controller to control the antenna element to emit short-range RF signals. The RF signals may power a passive NFC tag (e.g., a microchip embedded in a sticker or wristband) to transmit stored data to the NFC circuitry 640, or initiate data transfer between the NFC circuitry 640 and another active NFC device (e.g., a smartphone or an NFC-enabled POS terminal) that is proximate to the platform 600.

The driver circuitry 646 may include software and hardware elements that operate to control particular devices that are embedded in the platform 600, attached to the platform 600, or otherwise communicatively coupled with the platform 600. The driver circuitry 646 may include individual drivers allowing other components of the platform 600 to interact with or control various input/output (I/O) devices that may be present within, or connected to, the platform 600. For example, driver circuitry 646 may include a display driver to control and allow access to a display device, a touchscreen driver to control and allow access to a touchscreen interface of the platform 600, sensor drivers to obtain sensor readings of sensor circuitry 621 and control and allow access to sensor circuitry 621, EMC drivers to obtain actuator positions of the EMCs 622 and/or control and allow access to the EMCs 622, a camera driver to control and allow access to an embedded image capture device, audio drivers to control and allow access to one or more audio devices.

The power management integrated circuitry (PMIC) 625 (also referred to as "power management circuitry 625") may manage power provided to various components of the platform 600. In particular, with respect to the baseband circuitry 610, the PMIC 625 may control powersource selection, voltage scaling, battery charging, or DC-to-DC conversion. The PMIC 625 may often be included when the platform 600 is capable of being powered by a battery 630, for example, when the device is included in a UE 401.

In some embodiments, the PMIC 625 may control, or otherwise be part of, various power saving mechanisms of the platform 600. For example, if the platform 600 is in an RRC_Connected state, where it is still connected to the RAN node as it expects to receive traffic shortly, then it may enter a state known as Discontinuous Reception Mode (DRX) after a period of inactivity. During this state, the platform 600 may power down for brief intervals of time and thus save power. If there is no data traffic activity for an extended period of time, then the platform 600 may transition off to an RRC_Idle state, where it disconnects from the network and does not perform operations such as channel quality feedback, handover, etc. The platform 600 goes into a very low power state and it performs paging where again it periodically wakes up to listen to the network and then powers down again. The platform 600 may not receive data in this state; in order to receive data, it must transition back to RRC_Connected state. An additional power saving mode may allow a device to be unavailable to the network for periods longer than a paging interval (ranging from seconds to a few hours). During this time, the device is totally unreachable to the network and may power down completely. Any data sent during this time incurs a large delay and it is assumed the delay is acceptable.

A battery 630 may power the platform 600, although in some examples the platform 600 may be mounted deployed in a fixed location, and may have a power supply coupled to an electrical grid. The battery 630 may be a lithium ion battery, a metal-air battery, such as a zinc-air battery, an aluminum-air battery, a lithium-air battery, and the like. In some implementations, such as in V2X applications, the battery 630 may be a typical lead-acid automotive battery.

In some implementations, the battery 630 may be a "smart battery," which includes or is coupled with a Battery Management System (BMS) or battery monitoring integrated circuitry. The BMS may be included in the platform 600 to track the state of charge (SoCh) of the battery 630. The BMS may be used to monitor other parameters of the battery 630 to provide failure predictions, such as the state of health (SoH) and the state of function (SoF) of the battery 630. The BMS may communicate the information of the battery 630 to the application circuitry 605 or other components of the platform 600. The BMS may also include an analog-to-digital (ADC) convertor that allows the application circuitry 605 to directly monitor the voltage of the battery 630 or the current flow from the battery 630. The battery parameters may be used to determine actions that the platform 600 may perform, such as transmission frequency, network operation, sensing frequency, and the like.

A power block, or other power supply coupled to an electrical grid may be coupled with the BMS to charge the battery 630. In some examples, the power block may be replaced with a wireless power receiver to obtain the power wirelessly, for example, through a loop antenna in the computer platform 600. In these examples, a wireless battery charging circuit may be included in the BMS. The specific charging circuits chosen may depend on the size of the battery 630, and thus, the current required. The charging may be performed using the Airfuel standard promulgated by the Airfuel Alliance, the Qi wireless charging standard promulgated by the Wireless Power Consortium, or the Rezence charging standard promulgated by the Alliance for Wireless Power, among others.

User interface circuitry 650 includes various input/output (I/O) devices present within, or connected to, the platform 600, and includes one or more user interfaces designed to enable user interaction with the platform 600 and/or peripheral component interfaces designed to enable peripheral component interaction with the platform 600. The user interface circuitry 650 includes input device circuitry and output device circuitry. Input device circuitry includes any physical or virtual means for accepting an input including, inter alia, one or more physical or virtual buttons (e.g., a reset button), a physical keyboard, keypad, mouse, touchpad, touchscreen, microphones, scanner, headset, and/or the like. The output device circuitry includes any physical or virtual means for showing information or otherwise conveying information, such as sensor readings, actuator position(s), or other like information. Output device circuitry may include any number and/or combinations of audio or visual display, including, inter alia, one or more simple visual outputs/indicators (e.g., binary status indicators (e.g., light emitting diodes (LEDs)) and multi-character visual outputs, or more complex outputs such as display devices or touchscreens (e.g., Liquid Chrystal Displays (LCD), LED displays, quantum dot displays, projectors, etc.), with the output of characters, graphics, multimedia objects, and the like being generated or produced from the operation of the platform 600. The output device circuitry may also include speakers or other audio emitting devices, printer(s), and/or the like. In some embodiments, the sensor circuitry 621 may be used as the input device circuitry (e.g., an image capture device, motion capture device, or the like) and one or more EMCs may be used as the output device circuitry (e.g., an actuator to provide haptic feedback or the like). In another example, NFC circuitry comprising an NFC controller coupled with an antenna element and a processing device may be included to read electronic tags and/or connect with another NFC-enabled device. Peripheral component interfaces may include, but are not limited to, a non-volatile memory port, a USB port, an audio jack, a power supply interface, etc.

Although not shown, the components of platform 600 may communicate with one another using a suitable bus or interconnect (IX) technology, which may include any number of technologies, including ISA, EISA, PCI, PCIx, PCIe, a Time-Trigger Protocol (TTP) system, a FlexRay system, or any number of other technologies. The bus/IX may be a proprietary bus/IX, for example, used in a SoC based system. Other bus/IX systems may be included, such as an I2C interface, an SPI interface, point-to-point interfaces, and a power bus, among others.

With the rapid proliferation of internet-connected devices and networks, such as those introduced above, governments are taking increasingly active measures to regulate these networks, devices coupled to these networks, and the technologies used within these networks. For instance, a number of issues of public interest have developed through the adoption of wireless network devices and applications, including cybersecurity, user privacy, and other example issues. For instance, the European Commission has issued a Delegated Regulation implemented through the activation of Articles 3(3)(d), (e), and (f) of the European Radio Equipment Directive (RED) dictating certain cybersecurity and privacy requirements that are proposed to be met by any radio equipment in order to qualify for market access in the Single European Market. Specifically, the proposed regulation sets for that:
*3. Radio equipment within certain categories or classes shall be so constructed that it complies with the following essential requirements:*
*(d) radio equipment does not harm the network or its functioning nor misuse network resources, thereby causing an unacceptable degradation of service;*
*(e) radio equipment incorporates safeguards to ensure that the personal data and privacy of the user and of the subscriber are protected;*
*(f) radio equipment supports certain features ensuring protection from fraud.*

This proposed regulation (among other similar regulations being proposed or developed) may challenge the developers of radio equipment devices, as the standards name requirements that may not only be nebulous in their definitions (e.g., what does it mean to "harm the network or its functioning"), but may be effectively impossible to determine ex ante whether the radio equipment (e.g., during its initial compliance testing) will always be in compliance, given the device's likely exposure to a number of different other networks and devices (e.g., as mobile user equipment migrates from one connection to another, as WiFi nodes are deployed in various applications by the end user, etc.), among other example challenges.

In the case of the proposed European Commission regulation, European Standards Organizations (ESOs), such as Comité Européen de Normalisation(CEN) and Comité Européen de Normalisation Électrotechnique (CENELEC), are currently working towards the creation of a related Harmonized Standard supporting the implementation of the regulation. Similar to the regulation itself, the proposed Harmonization Standard also challenges radio equipment developers. For instance, the draft Harmonized Standard currently under development by CEN/CENELEC currently requires knowledge (by the radio equipment device) of whether a given wireless communication interface complies with certain cybersecurity and privacy requirements such as i) Does the interface operate in trusted networks?, ii) Does the interface provide access to privacy assets or equipment security assets?, etc. However, it is practically impossible to determine and represent, a-priori, a once-and-for-all answer to such questions, in particular for the case of generic communication equipment. For example, how can it be established in advance (e.g., during the conformity assessment process for the regulation) whether WiFi communication equipment (or any other communication equipment) definitively will or will not operate in a trusted or untrusted network environment in the future, or will or will not have access to privacy assets, etc. Accordingly, manufacturers and developers of such equipment will struggle to provide a definitive answer to the individual requirements of this (and other analogous) harmonized standard definitions.

Radio equipment devices within the context of this discussion may include any electrical or electronic product, which intentionally emits and/or receives radio waves for the purpose of radio communication and/or radio determination, or an electrical or electronic product which utilizes an accessory, such as an antenna, to intentionally emit and/or receive radio waves for the purpose of radio communication and/or radio determination. FIGS. 1-6 provide examples of the wide range of types of radio equipment devices currently in use (e.g., smartphones, personal computers, loT devices, edge computing devices, toys, wearable devices, gaming systems, smart appliances, vehicles, drones, robots, access points, base stations, roadside units, RAN nodes, etc.), among others current and future radio equipment devices. Such radio equipment devices may include one or more network interfaces allowing the radio equipment to access a network (e.g., wired network interfaces (e.g., a Ethernet port, LAN port, etc.) or a wireless interface (e.g., enabling WLAN, WiFi, near field communication (NFC), or Bluetooth communication (e.g., using one or more antennae).

In an improved radio equipment (RE) device, regulatory compliance logic may be included (e.g., implemented in software, firmware, and/or hardware of the RE device) to enable the RE device to dynamically assess, for each network connection it establishes, whether the RE device would remain in compliance with one or more regulations to which it has been tested to be in compliance. Some of these regulations, however, may require that the device guaranty that it connects to networks with certain security levels or uses networks for certain approved purposes-conditions over which the RE device has only partial control over and which may be influenced by the types of networks and transactions it participates in over its lifespan. Accordingly, the RE device may engage in a case-by-case risk assessment based on the defined regulations for each network connection it establishes. In one example implementation, the regulatory compliance logic of an RE device may perform, for each connection it attempts to establish, an interface handshake procedure, which allows any type of RE device (e.g., a WiFi client device, AP equipment, etc.) to verify whether it is connecting to equipment that is fulfilling the same regulatory requirements. For instance, in the CEN/CENELEC Harmonized Standard for the European Radion Equipment Directive, RE devices are tested according to the "Intended Interface Use" of its network interfaces. For instance, RE devices may be designed to operate only in certain conditions (e.g., to only operate in secured or otherwise trusted networks) and are approved under the regulation based on this assumed use, among other examples.

A regulation governing the security and privacy protections to be included with an RE device may include a variety of different rules and policies. Some of the rules may govern attributes of the RE device that are statically (e.g., permanently) defined during design time, such as the user interface design of the RE device, the cryptographic keys or hardware used in the device, the attributes of the software or firmware installed on the device, the nature of secure data stores used on the device, among other features over which the device has full, local, and a priori control. Other attributes of the RE device's security may be at least partially dependent on other devices and systems, making definitive guarantees impracticable. Intended network interface uses is one such example, among other regulatory requirements governing the types of networks or external devices to which an RE device may connect.

In some instances, a regulatory framework may recognize the transitory nature of a device's network connections and may require the device to implement countermeasures and algorithms that continuously guard against insecure or risky network connections in order to "pass" related regulatory requirements. The inclusion of an example regulatory compliance engine on the device (e.g., to perform an interface handshake) may be the basis of an RE device's regulatory approval (e.g., to allow the RE device to be approved for use and marketing within the Single European Market), among other example benefits. Indeed, the adoption of the European Radio Equipment Directive Articles 3(3)(d/e/f) related to Cybersecurity and Privacy will make regulatory compliance mandatory for all radio equipment in scope (including WiFi equipment, cellular communications equipment (such as 4G, 5G, 6G, etc. equipment), etc.) in order to be allowed within the Single European Market. Advantageously, the interface handshake may be utilize to allow a given RE device to verify whether related attachment points of an equipment are meeting the requirements under which the given RE device is authorized to operate under a given regulation.

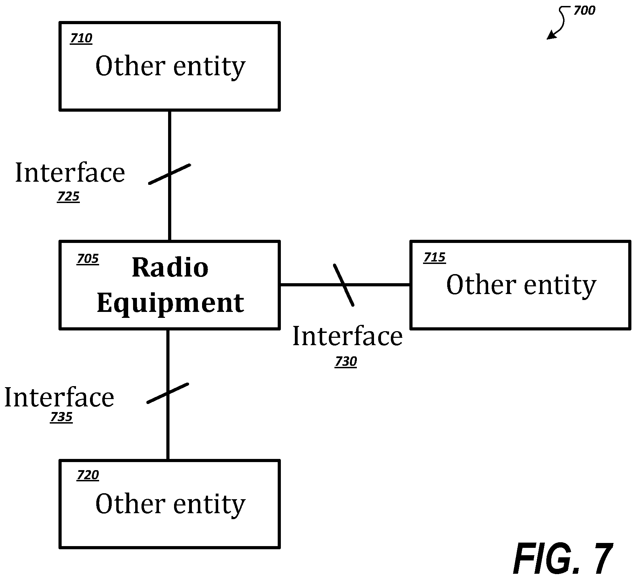

Turning to the simplified block diagram 700 of FIG. 7, a given RE device 705 may be provided and include one or more interfaces to couple to other devices (e.g., 710, 715, 720) through wired or wireless communication channels. The RE device 705 may be subjected to compliance verification to determine whether the RE device 705 is in compliance with a cybersecurity and privacy regulation. In the example of FIG. 7, the RE device 705 may be assessed as the device under test connected to one or multiple other entities through corresponding reference points that use point-to-point wired or wireless interfaces (e.g., logical or physical interfaces). The compliance verification may account for the proposed function and/or type of the device (e.g., with certain devices subject to more or stricter regulatory requirements). Some of the regulatory requirements and the verification may assess what types of networks the RE device may connect to, the use of its interfaces, the type of data to be sent or received on its interfaces, the number and type of its interfaces, among other example attributes. Compliance of an RE device to one or more regulation may be conditioned on the assumption that the RE device, when in the field, will only support communications over connections that align with these assumptions or that apply appropriate countermeasures to alleviate risk associated with any deviations from these assumptions, among other examples.

An RE device subject to cybersecurity and security regulations may include a wide variety of devices including stand-alone devices and products (e.g., a WiFi Access Point, a wireless base station, a mobile device, etc.) to be placed onto the market, a component for inclusion within a product (e.g., a chipset, communication adapter device, radio element, etc.), a function of such a product (which may be implemented through a hardware or software or combination of hardware/software based solution), among other examples.

In the example of FIG. 7, various interfaces (e.g., 725, 730, 735) of the RE device 705 may be tested to ensure they meet certain requirements set forth in the regulation. However, for requirements involving the RE device's connection to other entities (e.g., other devices, components of those devices, systems, particular services implemented on another device, etc.), the RE device, when possessed by another party (e.g., a customer) may be used and connected in ways not foreseen or out of the control of the manufacturer who was a party to the compliance testing of the RE device. To permit the RE device to mitigate uses or connections, which may violate the required regulations, the RE device may support an interface handshake for use in performing risk assessment and mitigation for each connection the RE device attempts to make during live, in-field use (post-regulatory conformity phase and compliance verification).

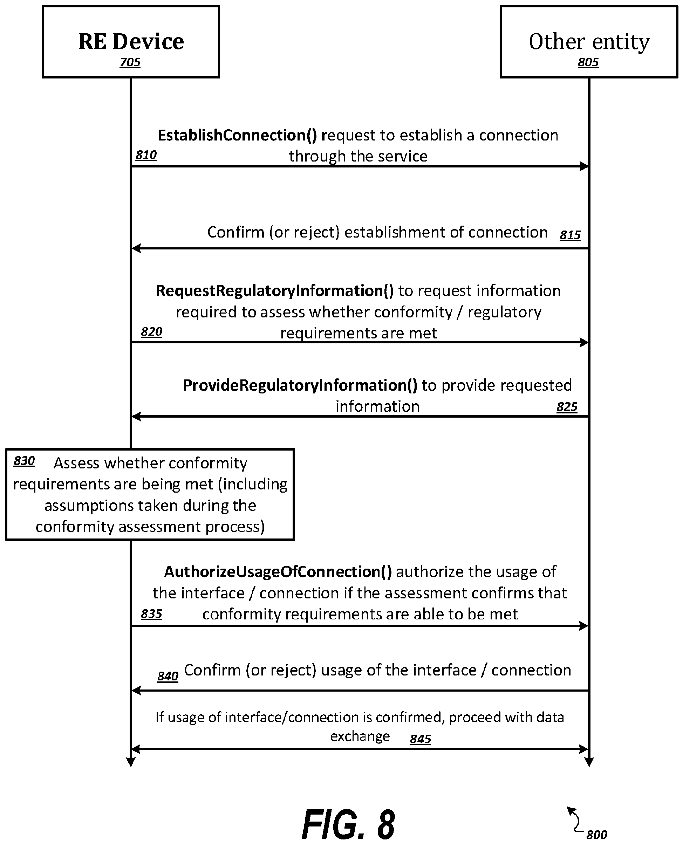

FIG. 8 is a diagram 800 illustrating an example implementation of an interface handshake, which may be conducted at the direction of regulatory compliance logic of an example RE device 705. The RE device 705 may identify another device 805 on a wired or wireless communication channel over which the handshake messages are to be communicated. In one example, the RE device 705 may send a request 810 to the other device 805 to establish a connection over the channel. In some implementations, a service EstablishConnection() may be utilized to establish the connection (e.g., to perform needed link training, establish a 5G link (e.g., perform initial access), etc.). The other device 805 may acknowledge or otherwise confirm or participate (e.g., at 815) in the establishment of the connection. With a connection opened, the RE device may send a request 820 for regulatory information from the other device over the connection. The RE device 705 may refrain from sending or receiving additional substantive data (e.g., associated with an application or service run on the other device 805) until the RE device 705 establishes that a connection with the other device 805 may be maintained while remaining in compliance with regulatory requirements.

In some instances, the request for regulatory information may identify a set of information (e.g., attributes regarding the other device 805 and/or an associated network) and await each item in the set of information to be returned from the other device in a response 825. In other instances, the handshake and request for regulatory information (e.g., implemented using a service RequestRegulatorylnformation()) may be pre-established and a response format or service (e.g., ProvideRegulatorylnformation()) may be defined to expeditiously allow the handshake to proceed and deliver to the RE device the sufficient information to assess (at 830) whether the regulatory conformity requirements (e.g., as defined in a harmonized standard) will be met in continuing with the connection with the other device 805 (including maintaining assumptions applied during the regulatory validation/conformity process for the RE device 705).

In some cases, the RE device may assess the attributes returned in the response 825 to determine that the regulatory requirements are being maintained and the RE device may send confirmation 835 to the other device that more substantive usage of the connection may proceed. In some implementations, upon receiving an acknowledgement or confirmation message (e.g., 840) from the other device 805, the RE device and other device may commence the exchange of data 845 (e.g., in association with the communication of data in association with a given application, service, or workload). In other instances, the assessment 830 of the attribute information returned in the response 825 (e.g., regarding attributes of the other device 805 or certain components of the device, its logic, its existing network connections or affiliations, the security or authentication information associated with the other device 805, etc.) may serve as the basis for determining that the connection would be inconsistent with conditions for the RE device's continued conformity with an associated regulation. In some instances, the RE device may determine, through the assessment 830 of the response data, that one or more particular requirements or non-conformities are implicated and may further identify particular mitigation processes or features or countermeasures, which the RE device 705 is able to deploy to adequately address these issues. As an example, the RE device 705 may determine the that use of virtual private network (VPN) connection or encryption of the communication channel (among other examples) may be deployed in reaction to the determination that a connection with the other device 805 results in certain particular non-conformities with the regulation. In other instances, the RE device 705 may simply determine that use of the connection with the other device is not allowed without undermining assumptions or conformity requirements set forth under certain regulations for the RE device. In some implementations, a disconnection notice or request (not shown) may be instead sent from the RE device 705 to the other device 805 to indicate that the RE device 705 is not permitted to use the connection, among other example implementations and features.

As noted above, in some implementations, the interfaces of the RE device 705 may each include logic to support and implement a set of services or functions to implement steps of the interface handshake. For instance, each interface may include one or more of the following services, including an EstablishConnection() service is used to establish a connection between the related entities, functions, components, or produce embodied in the other device in order to further exchange information to assess whether the interface may fulfill the regulatory requirements. A RequestRegulatorylnformation() service may be used to request information in order to assess whether the regulatory requirements are being met. This includes a verification whether the assumptions taken during the conformity assessment procedure are being fulfilled. For example, the conformity assessment for a given RE device may have been conducted under the assumption that the RE device will always operate in a "trusted network" environment. In such a case, a connection to external entities, functions, components, or products will only be authorized if those guarantee a "trusted network" environment (e.g., a company intra-net network) rather than a "non-trusted network" environment (e.g., a public WiFi access point, an unsecured and unverified access point, etc. A ProvideRegulatorylnformation() service may be called following the request to provide regulatory information and work to generate response data to provide the requested information to the requesting RE device. An AuthorizeUsageOfConnection() service is called In case it is determined that the relevant regulatory conditions are being met to use the target entities, functions, components, or products, etc. through the available interface(s) of the RE device. Based on the assessment of whether regulatory compliance will be maintained, this service may authorize (or deny) the usage of the concerned interface(s) and/or the connection to the target entities, functions, components, or products, among other example services and implementations.

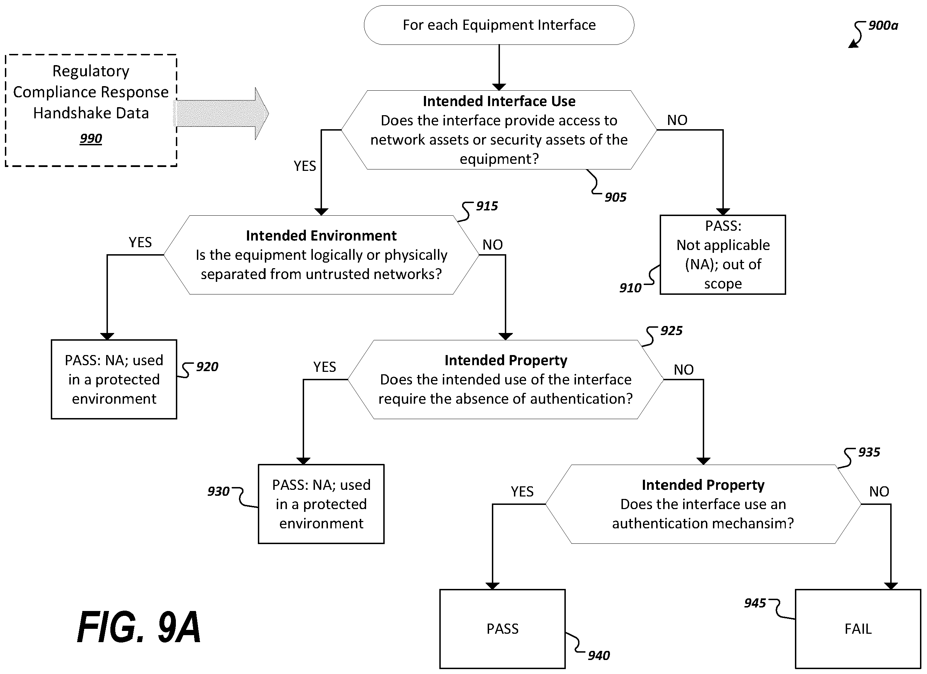

In some implementations, a regulation may define a number of decision trees to model and define the logic, attributes, and/or features to be provided and maintained by an RE device and its respective components in order to be in compliance with a respective regulation. FIGS. 9A-9D are examples of decision trees 900a-d, which may embody the conditions or requirements for an RE device to be considered in compliance with an associated regulation. In the example of FIG. 9A, a decision tree 900a is represented to define conditions for determining whether the intended interface use of a given network interface of an RE device is in compliance with a cyber security and/or data privacy regulatory standard or not. This decision tree may be the basis (along with potentially multiple other decision trees defined in accordance with a regulation or set of regulations) for forming a request and expecting a corresponding response in an interface handshake participated in between an RE device and another device on a network connection using an interface of the RE device.

In the example of FIG. 9A, the decision tree 900a is to be applied to each interface of the RE device and bases the RE device's compliance on whether the defined conditions in the decision tree 900a are either not applicable or passed by each interface of the RE device. For instance, it is first assessed (at 905) whether the interface provides access to network assets or security assets. Network assets may refer to any network functions (which the RE devices uses to access network resources), network function configurations stored on the RE Device, or any sensitive security parameters stored on the RE device for access to network resources. Security assets may refer to the RE device's security functionality that directly impacts the RE device's integrity, security relevant configurations used by the RE device, or any sensitive (e.g., confidential) security parameters for the RE device's integrity as used by the RE device, among other examples. If the interface does not provide other entities access to its network assets or security assets (at 910), the interface passes the conformity check for this regulation as the interface is out of scope of the regulation (e.g., and the regulation is not applicable). If, however, access to the RE device network assets or security assets is provided through the interface, the assessment continues by walking the decision tree 900a to a next node 915 to determine whether the RE device is logically or physically separated from untrusted networks. This node may vary case-by-case based on how the RE device is deployed in the field. An answer to a request for regulatory information received during an interface handshake may provide network attribute information, which may be used by the RE device to determine whether an associated connection at the interface is with a trusted or untrusted network. Further, the RE device, in some implementations, may include functionality to apply a mitigation feature to logically or physically separate the RE device from any untrusted networks (e.g., by applying a target network verification process to perform an enhanced trust check for the network (e.g., to assess the trustworthiness of the target network) and allowing the connection only if trust is validated, among other examples).

Continuing with the example of FIG. 9A, if the RE device interface is determined to be separated from untrusted networks, the interface may "pass" 920 the regulatory requirements under the regulation corresponding to the decision tree 900a. If the interface is found to connect to an untrusted network, the assessment may continue by walking the decision tree 900a further to node 925 to identify whether the interface requires the absence of authentication in order to fulfill its intended use (e.g., where applying an authentication requirement to the interface would change or impede the intended function and purpose of the interface and/or RE device). If the interface does require a lack of authentication in order to function properly, the interface may pass 930 as being out of scope with the regulation. If authentication is used, the decision tree may continue to node 935 to determine whether an authentication mechanism is provided. In this example, if the authentication mechanism is provided, the interface passes 940 these standards of the regulation. In some implementations, the RE device may determine that authentication is not provided as a default, but may dynamically enable an authentication feature or protocol (e.g., in response to receiving regulatory conformity data (e.g., 990) from a link partner in an interface handshake that indicates a connection to an untrusted network) in order to bring the interface and RE device into continued compliance with the regulation (at 920). In other cases, the RE device may determine that an authentication mechanism is not available or not desired and may determine that using a corresponding connection would cause the interface to fail (at 945) continued conformity with the regulations. Accordingly, in such instances, the RE device may terminate the connection with the corresponding network entity. Where the RE device determines, from the decision tree 900a (and potentially multiple other decision trees corresponding to additional requirements under the regulation (or other parallel regulations)) that the connection allows the RE device to remain in regulatory compliance, the RE device may allow the connection to persist and be used.

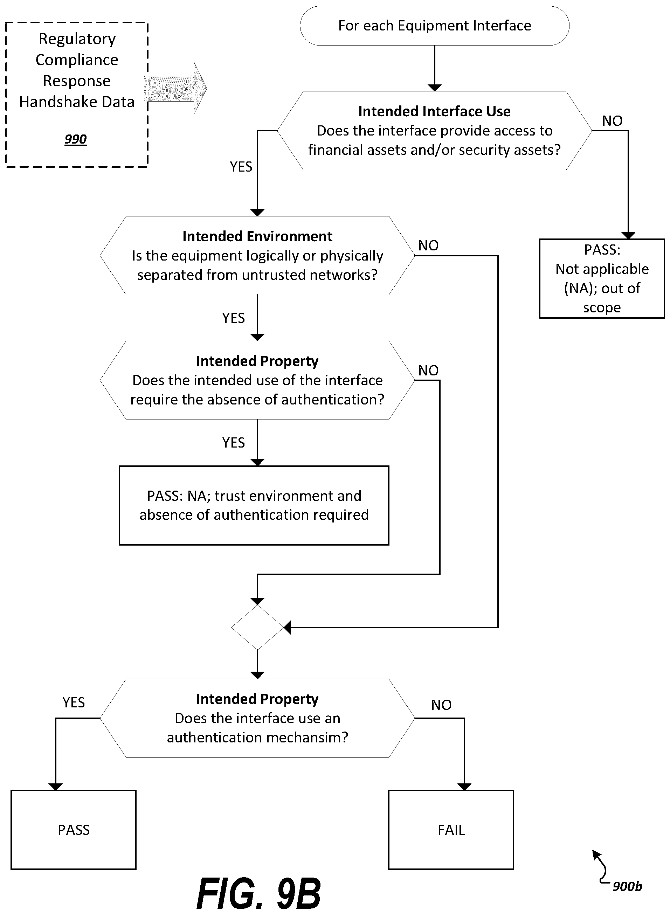

Turning to FIG. 9B, another example decision tree 900b is illustrated showing another decision tree defined under a regulation for determining whether a given network interface of an RE device is in compliance or not. The decision tree 900b in the example of FIG. 9B may be used in association with the same or a different regulation that applies to a given RE device. For instance, a given RE device may assess whether its interface conform both to the decision tree 900a of FIG. 9A and the decision tree 900b of FIG. 9B before proceeding with a connection. Likewise, in an interface handshake, the RE device may request regulatory compliance information (e.g., 990) from its link partner that is sufficient for the RE device to walk through each of the decision trees (e.g., 900a-900d) it is bound to follow in order to maintain regulatory compliance before agreeing to use the network connection over the interface. In one example, the decision tree 900a is defined to assess intended interface use for one type of radio equipment (e.g., for general internet-connected devices) while decision tree 900b is defined (e.g., under the same regulation) to assess intended interface use for another type of radio equipment (e.g., a device for use in electronic payments, as child's toy, etc.).

During an interface handshake, in some implementations, the request for regulatory information may identify or otherwise expect that regulatory information 990 be returned in (a single) response that is sufficient to allow the assessing RE device to walk all of the decision trees defined under the regulations it is bound to comply with. In other implementations, the request/response interchange during the interface handshake may be more granular, with multiple requests for regulatory information being made, with some requests dependent on information returned in an earlier response. As an example, in one implementation, a series of requests/responses for regulatory information may be exchanged and correspond with an RE device's regulatory compliance engine walking one or more decision trees. For instance, using the decision tree 900a of FIG. 9A as an example, a first exchange in the interface handshake may involve the RE device requesting information associating with node 915 and then sending a follow-up request for additional regulatory information associated with node 920 based on the data returned by the link partner entity for node 915, among other examples.

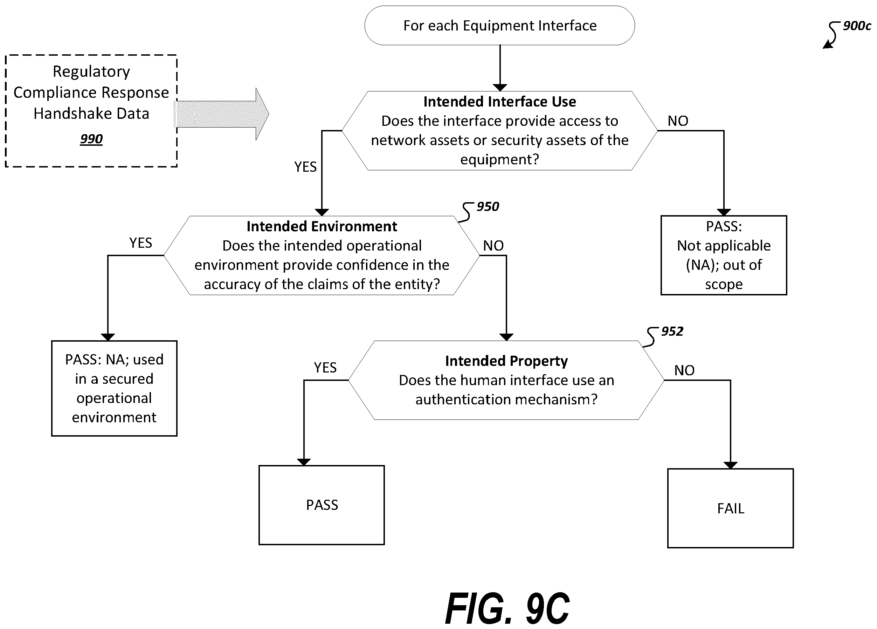

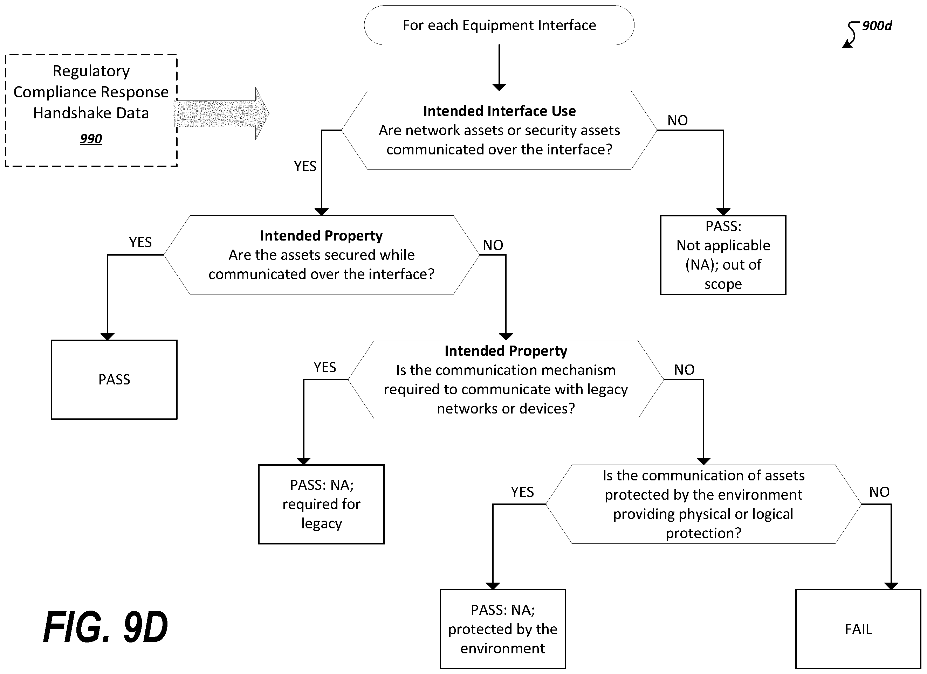

FIG. 9C and 9D provide additional examples of decision tree 900c-900d, which may be applied in a cybersecurity and/or privacy regulation governing RE devices. In the example of FIG. 9C, in determining intended interface usage for interfaces of an example RE device, the decision tree 900c may include a node 950, which assess whether the intended operational environment provides confidence in the correctness of a link partner entities claims. Another node 952 may inquire regarding aspects of human interfaces (e.g., graphical user interfaces) used in association with the interface, among other examples. In some cases, regulatory compliance information returned by a link partner device in the interface handshake may include clear text descriptions or identifications of attributes requested by the RE device. In some cases, for instance, where trust, security, or confidence attributes are at issue, the attributes returned by the link partner device in the interface handshake may include authentication data (e.g., a certificate, cryptographic token, etc.) to establish the trustworthiness of the link partner device and the information it provides.

Turning to the example of FIG. 9D, other regulations may make requirements beyond the intended interface usage of RE devices. For instance, in FIG. 9D, a decision tree 900d is provided that is associated with a regulatory requirement regarding the manner in which security assets or privacy assets are communicated over network interfaces. Such a regulation may also be difficult to settle a priori and depend on how the RE device is deployed in the field (and which link partners and networks it interacts with). Accordingly, interface handshakes may also inquire for additional regulatory information from link partner devices to determine whether and how the RE device may remain in compliance with corresponding regulations when in live, in-the-field operation, among other example regulations and corresponding decision tree definitions.

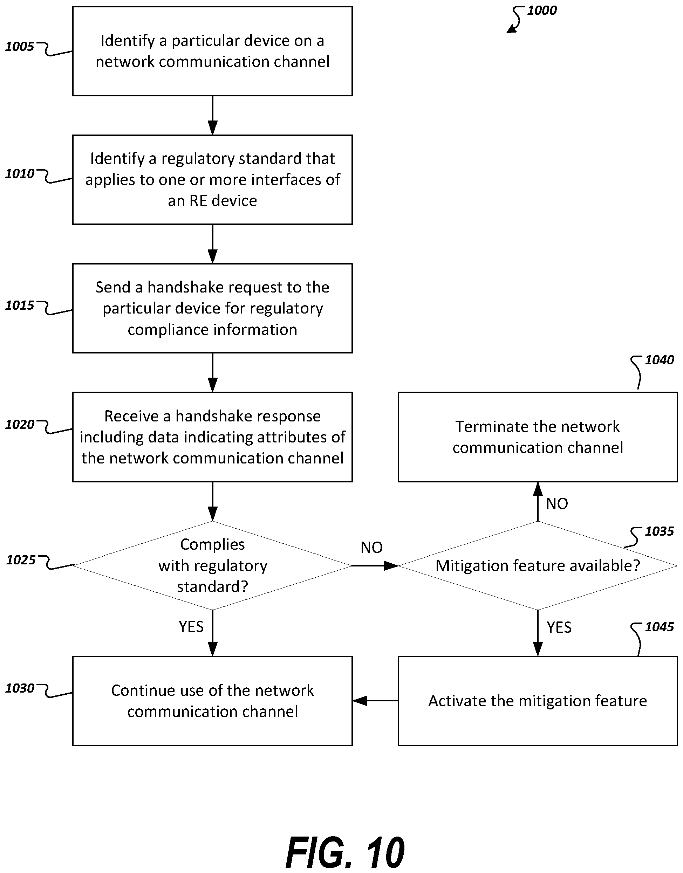

FIG. 10 is a simplified flow diagram illustrating an example technique for an RE device to assess potential network connections' compliance with regulatory requirements defined for the RE device using an interface handshake, such as discussed herein. For instance, the RE device may identify 1005 a particular device on a network communication channel. Initial steps and protocols may be utilized to set up and establish the initial connection between the RE device and other particular device on the network communication channel. The network communication channel may be a wired or wireless communication channel. A regulatory standard (e.g., a cybersecurity and/or data privacy regulation for radio equipment) may be identified 1010 that is to apply to the network communication channel (and a corresponding interface of the RE device that is used by the RE device in the network communication channel). In some implementations, identifying 1010 the regulatory standard may include identifying that the regulatory standard (among potentially one or more other regulatory standards) is to apply to the RE device based on a regulatory compliance test or verification performed for the RE device. Data may be resident on the RE device defining the regulatory standards that are to apply to the RE device together with various assumptions underpinning the RE device's compliance with the regulatory standard (e.g., representations that the RE device will only be used in certain environment or under certain conditions, that the RE device is classified as a particular type of device under the regulatory standard, etc.). In this manner, information concerning the RE device's approval under a regulatory standard may be utilized and direct the manner in which the RE device assesses it continued compliance (e.g., in the field) with the regulatory standard.

Continuing with the example of FIG. 10, based on identifying that one or multiple regulatory standards are to apply to the RE device and its network connections, the RE device may initiate an interface handshake with the particular device over the network communication channel. The handshake may include the sending of one or more requests 1015 for regulatory compliance information from the particular device. The information requested may be based on individual requirements of the identified regulatory standards. In some instances, the regulatory standards may be defined using one or more corresponding decision trees and the regulatory compliance information requested in the handshake may be based on one or all of the nodes of the decision trees. In response to the request, one or more handshake responses may be received 1020 and include data identifying attributes of the particular device and/or the network communication channel. From this information, the RE device (e.g., using regulatory compliance logic on the RE device) may determine 1025 whether use of the network communication channel (and the RE device's associated interface) would be in compliance with the one or more regulatory standards. In instances where decision trees are used to define conditions and requirements of a regulatory standard, the RE device may "walk" the decision tree using the response data (received at 1020) along with other information (e.g., information stored on the RE device relating to attributes of its prior validation for compliance with the regulatory standard) to determine whether use of the network communication channel allows the RE device to remain in compliance with the regulatory standard, among other example implementations.

In some implementations, the interface handshake (e.g., including the request 1015 and response 1020 and associated assessment 1025) may be performed each time the RE device opens a connection with another device. In some implementations, the same handshake is to be performed each time a connection with a given other device is renewed or resumed, notwithstanding the devices having completed the handshake and communications under a given regulatory standard in the past. In other cases, the RE device (e.g., as permitted under a regulatory standard) may identify whether an interface handshake has already been completed between the RE device and another device over a particular medium in association with assessing compliance with a given regulatory standard. If the RE device detects that an interface handshake has already been completed for a network connection (e.g., within a defined window of time), the RE device may modify the handshake to conduct an abbreviated interface handshake for the same regulatory standard. For instance, an abbreviated interface handshake may involve querying the other device whether any changes have been made to regulatory compliance data shared in the previously completed interface handshake. In other examples, the abbreviated interface handshake may request an abbreviated amount of information (e.g., less than requested in the original interface handshake), and assess only select portions of a corresponding decision tree, among other examples, to implement a more compact version of the interface handshake to determine continued compliance with the regulatory standard, among other example implementations.

Continuing with the example of FIG. 10, if the RE device determines (at 1025) through the interface handshake that its compliance with one or more regulatory standards will be maintained during use of a particular network communication channel (coupling the RE device to a particular other device), the RE device may continue 1030 use of the network communication channel, for instance, by notifying the other device and allowing the exchange of more substantive and/or more sensitive data (e.g., associated with a given application or service) over the network communication channel. If, however, the RE device determines (at 1025) that continued use of the network communication channel puts its compliance with one or more regulatory standards at risk, the RE device, in some implementations, may attempt to determine (at 1035) whether mitigation features (e.g., functionality or processes) are available at the RE device, which could allow the network communication channel to still be used and alleviate the risk to its compliance with the regulatory standard. If such features exist, the RE device may enable or activate the features 1045 within the context of the network communication channel in order to continue using 1030 the network communication channel. If no opportunities exist to mitigate the discovered non-compliance with the regulatory standard associated with the network communication channel, the RE device may determine that the use of the network communication channel (or communications with the other device more generally) are unacceptable and may terminate 1040 the connection. In some instances, mitigation of instances of non-compliant network connection may not be possible or allowed (e.g., under the corresponding regulatory standard) and any determination (at 1025) that an associated RE device interface would not be in continued compliance with a regulatory standard may result in termination 1040 of the network communication channel, among other example features and implementations.

In addition to the specific illustrative examples discussed above, it should be appreciated that a variety of different RE devices may include regulatory compliance logic to implement interface handshakes and other features discussed above. Interfaces of the RE devices and assessment of the regulatory compliance of such interfaces may include interfaces implemented according to a variety of different radio communication technologies. For instance, RE devices may implement radio links according to any one or more of the following radio communication technologies and/or standards including but not limited to: a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology, for example Universal Mobile Telecommunications System (UMTS), Freedom of Multimedia Access (FOMA), 3GPP Long Term Evolution (LTE), 3GPP Long Term Evolution Advanced (LTE Advanced), Code division multiple access 2000 (CDMA2000), Cellular Digital Packet Data (CDPD), Mobitex, Third Generation (3G), Circuit Switched Data (CSD), High-Speed Circuit-Switched Data (HSCSD), Universal Mobile Telecommunications System (Third Generation) (UMTS (3G)), Wideband Code Division Multiple Access (Universal Mobile Telecommunications System) (W-CDMA (UMTS)), High Speed Packet Access (HSPA), High-Speed Downlink Packet Access (HSDPA), High-Speed Uplink Packet Access (HSUPA), High Speed Packet Access Plus (HSPA+), Universal Mobile Telecommunications System-Time-Division Duplex (UMTS-TDD), Time Division-Code Division Multiple Access (TD-CDMA), Time Division-Synchronous Code Division Multiple Access (TD-CDMA), 3rd Generation Partnership Project Release 8 (Pre-4th Generation) (3GPP Rel. 8 (Pre-4G)), 3GPP Rel. 9 (3rd Generation Partnership Project Release 9), 3GPP Rel. 10 (3rd Generation Partnership Project Release 10), 3GPP Rel. 11 (3rd Generation Partnership Project Release 11), 3GPP Rel. 12 (3rd Generation Partnership Project Release 12), 3GPP Rel. 13 (3rd Generation Partnership Project Release 13), 3GPP Rel. 14 (3rd Generation Partnership Project Release 14), 3GPP Rel. 15 (3rd Generation Partnership Project Release 15), 3GPP Rel. 16 (3rd Generation Partnership Project Release 16), 3GPP Rel. 17 (3rd Generation Partnership Project Release 17), 3GPP Rel. 18 (3rd Generation Partnership Project Release 18), 3GPP Rel. 19 (3rd Generation Partnership Project Release 19) and subsequent Releases (such as Rel. 20, Rel. 21, etc.), 3GPP 5G, 5G, 3GPP 6G, 6G, 6th Generation Cellular Networks, 5G New Radio (5G NR), 3GPP 5G New Radio, 3GPP LTE Extra, LTE-Advanced Pro, LTE Licensed-Assisted Access (LAA), MuLTEfire, UMTS Terrestrial Radio Access (UTRA), Evolved UMTS Terrestrial Radio Access (E-UTRA), Long Term Evolution Advanced (4th Generation) (LTE Advanced (4G)), cdmaOne (2G), Code division multiple access 2000 (Third generation) (CDMA2000 (3G)), Evolution-Data Optimized or Evolution-Data Only (EV-DO), Advanced Mobile Phone System (1st Generation) (AMPS (1G)), Total Access Communication System/Extended Total Access Communication System (TACS/ETACS), Digital AMPS (2nd Generation) (D-AMPS (2G)), Push-to-talk (PTT), Mobile Telephone System (MTS), Improved Mobile Telephone System (IMTS), Advanced Mobile Telephone System (AMTS), OLT (Norwegian for Offentlig Landmobil Telefoni, Public Land Mobile Telephony), MTD (Swedish abbreviation for Mobiltelefonisystem D, or Mobile telephony system D), Public Automated Land Mobile (Autotel/PALM), ARP (Finnish for Autoradiopuhelin, "car radio phone"), NMT (Nordic Mobile Telephony), High capacity version of NTT (Nippon Telegraph and Telephone) (Hicap), Cellular Digital Packet Data (CDPD), Mobitex, DataTAC, Integrated Digital Enhanced Network (iDEN), Personal Digital Cellular (PDC), Circuit Switched Data (CSD), Personal Handy-phone System (PHS), Wideband Integrated Digital Enhanced Network (WiDEN), iBurst, Unlicensed Mobile Access (UMA), also referred to as also referred to as 3GPP Generic Access Network, or GAN standard), Zigbee, Bluetooth(r), Radio Local Area Networks (RLAN), Wi-Fi (based on IEEE802.11 and/or IEEE 802.11b (Wi-Fi 1) and/or IEEE 802.11a (Wi-Fi 2) and/or IEEE 802.11g (Wi-Fi 3) and/or 802.11n (Wi-Fi 4) and/or IEEE 802.11ac (Wi-Fi 5) and/or IEEE 802.11ax (Wi-Fi 6) and/or IEEE802.11be (Wi-Fi 7) and/or any follow-up WiFi related technology), Wireless Gigabit Alliance (WiGig) standard, mmWave standards in general (wireless systems operating at 10-300 GHz and above such as WiGig, IEEE 802.11ad, IEEE 802.11ay, etc.), technologies operating above 300 GHz and THz bands, (3GPP/LTE based or IEEE 802.11p or IEEE 802.11bd and other) Vehicle-to-Vehicle (V2V) and Vehicle-to-X (V2X) and Vehicle-to-Infrastructure (V2I) and Infrastructure-to-Vehicle (I2V) communication technologies, 3GPP cellular V2X, DSRC (Dedicated Short Range Communications) communication systems such as Intelligent-Transport-Systems and others (typically operating in 5850 MHz to 5925 MHz or above (typically up to 5935 MHz following change proposals in CEPT Report 71)), the European ITS-G5 system (i.e. the European flavor of IEEE 802.11p based DSRC, including ITS-G5A (i.e., Operation of ITS-G5 in European ITS frequency bands dedicated to ITS for safety re-lated applications in the frequency range 5,875 GHz to 5,905 GHz), ITS-G5B (i.e., Operation in European ITS frequency bands dedicated to ITS non- safety applications in the frequency range 5,855 GHz to 5,875 GHz), ITS-G5C (i.e., Operation of ITS applications in the frequency range 5,470 GHz to 5,725 GHz)), DSRC in Japan in the 700MHz band (including 715 MHz to 725 MHz), IEEE 802.11bd based systems, etc.

Aspects described herein can be used in the context of any spectrum management scheme including dedicated licensed spectrum, unlicensed spectrum, license exempt spectrum, (licensed) shared spectrum (such as LSA = Licensed Shared Access in 2.3-2.4 GHz, 3.4-3.6 GHz, 3.6-3.8 GHz and further frequencies and SAS = Spectrum Access System / CBRS = Citizen Broadband Radio System in 3.55-3.7 GHz and further frequencies). Applicable spectrum bands include IMT (International Mobile Telecommunications) spectrum as well as other types of spectrum/bands, such as bands with national allocation (including 450 - 470 MHz, 902-928 MHz (note: allocated for example in US (FCC Part 15)), 863-868.6 MHz (note: allocated for example in European Union (ETSI EN 300 220)), 915.9-929.7 MHz (note: allocated for example in Japan), 917-923.5 MHz (note: allocated for example in South Korea), 755-779 MHz and 779-787 MHz (note: allocated for example in China), 790 - 960 MHz, 1710 - 2025 MHz, 2110 - 2200 MHz, 2300 - 2400 MHz, 2.4-2.4835 GHz (note: it is an ISM band with global availability and it is used by Wi-Fi technology family (11b/g/n/ax) and also by Bluetooth), 2500 - 2690 MHz, 698-790 MHz, 610 - 790 MHz, 3400 - 3600 MHz, 3400 - 3800 MHz, 3800 - 4200 MHz, 3.55-3.7 GHz (note: allocated for example in the US for Citizen Broadband Radio Service), 5.15-5.25 GHz and 5.25-5.35 GHz and 5.47-5.725 GHz and 5.725-5.85 GHz bands (note: allocated for example in the US (FCC part 15), consists four U-NII bands in total 500 MHz spectrum), 5.725-5.875 GHz (note: allocated for example in EU (ETSI EN 301 893)), 5.47-5.65 GHz (note: allocated for example in South Korea, 5925-7125 MHz and 5925-6425MHz band (note: under consideration in US and EU, respectively. Next generation Wi-Fi system is expected to include the 6 GHz spectrum as operating band but it is noted that, as of December 2017, Wi-Fi system is not yet allowed in this band. Regulation is expected to be finished in 2019-2020 time frame), IMT-advanced spectrum, IMT-2020 spectrum (expected to include 3600-3800 MHz, 3800 - 4200 MHz, 3.5 GHz bands, 700 MHz bands, bands within the 24.25-86 GHz range, etc.), spectrum made available under FCC's "Spectrum Frontier" 5G initiative (including 27.5 - 28.35 GHz, 29.1 - 29.25 GHz, 31 - 31.3 GHz, 37 - 38.6 GHz, 38.6 - 40 GHz, 42 - 42.5 GHz, 57 - 64 GHz, 71 - 76 GHz, 81 - 86 GHz and 92 - 94 GHz, etc), the ITS (Intelligent Transport Systems) band of 5.9 GHz (typically 5.85-5.925 GHz) and 63-64 GHz, bands currently allocated to WiGig such as WiGig Band 1 (57.24-59.40 GHz), WiGig Band 2 (59.40-61.56 GHz) and WiGig Band 3 (61.56-63.72 GHz) and WiGig Band 4 (63.72-65.88 GHz), 57-64/66 GHz (note: this band has near-global designation for Multi-Gigabit Wireless Systems (MGWS)/WiGig . In US (FCC part 15) allocates total 14 GHz spectrum, while EU (ETSI EN 302 567 and ETSI EN 301 217-2 for fixed P2P) allocates total 9 GHz spectrum), the 70.2 GHz - 71 GHz band, any band between 65.88 GHz and 71 GHz, bands currently allocated to automotive radar applications such as 76-81 GHz, and future bands including 94-300 GHz and above. Furthermore, the scheme can be used on a secondary basis on bands such as the TV White Space bands (typically below 790 MHz) where in particular the 400 MHz and 700 MHz bands are promising candidates. Besides cellular applications, specific applications for vertical markets may be addressed such as PMSE (Program Making and Special Events), medical, health, surgery, automotive, low-latency, drones, etc. applications.

Aspects described herein can also implement a hierarchical application of the scheme is possible, e.g. by introducing a hierarchical prioritization of usage for different types of users (e.g., low/medium/high priority, etc.), based on a prioritized access to the spectrum e.g. with highest priority to tier-1 users, followed by tier-2, then tier-3, etc. users, etc.

Aspects described herein can also be applied to different Single Carrier or OFDM flavors (CP-OFDM, SC-FDMA, SC-OFDM, filter bank-based multicarrier (FBMC), OFDMA, etc.) and in particular 3GPP NR (New Radio) by allocating the OFDM carrier data bit vectors to the corresponding symbol resources. Some of the features in this document are defined for the network side, such as Access Points, eNodeBs, New Radio (NR) or next generation Node Bs (gNodeB or gNB - note that this term is typically used in the context of 3GPP fifth generation (5G) communication systems), etc. Still, a User Equipment (UE) may take this role as well and act as an Access Points, eNodeBs, gNodeBs, etc., among other examples.

In some embodiments, the electronic device(s), network(s), system(s), chip(s) or component(s), or portions or implementations thereof, of FIGS. 1-6, or some other figure herein, may be configured to perform one or more processes, techniques, or methods as described herein, or portions thereof. Examples of such processes are depicted in FIGS. 8 and 10. For example, the process may include initiating and participating in an interface handshake to assess whether a connection allows the initiating device to remain in compliance with regulatory standards, among other example features.

For one or more embodiments, at least one of the components set forth in one or more of the preceding figures may be configured to perform one or more operations, techniques, processes, and/or methods as set forth in the example section below. For example, the baseband circuitry as described above in connection with one or more of the preceding figures may be configured to operate in accordance with one or more of the examples set forth below. For another example, circuitry associated with a UE, base station, network element, or other RE device, as described above in connection with one or more of the preceding figures, may be configured to operate in accordance with one or more of the examples set forth below in the example section.

Example 1 is a computer-implemented method including: identifying a particular device accessible over a network communication channel; identifying that a regulatory standard applies to the network communication channel; sending a request, over the network communication channel, for regulatory compliance information from the particular device based on the regulatory standard; receiving response data to the request from the particular device over the network communication channel, where the response data identifies a set of attributes associated with one or more of the network communication channel or the particular device, and the set of attributes are associated with a set of one or more decision trees defined by the regulatory standard to indicate compliance of radio equipment devices with the regulatory standard; and determining, based on the set of attributes and the set of decision trees, whether use of the network communication channel complies with the regulatory standard.

Example 2 includes the subject matter of example 1, where the set of attributes are determined to indicate that continued use of the network communication channel would violate the regulatory standard based on the set of decision trees.

Example 3 includes the subject matter of example 2, where the method further includes sending a message to the particular device to terminate the network communication channel based on determining that continued use of the network communication channel would violate the regulatory standard.

Example 4 includes the subject matter of example 2, where the method further includes: identifying a mitigation feature to mitigate violation of the regulatory standard based on at least one of the set of decision trees or the set of attributes; activating the mitigation feature based on determining that continued use of the network communication channel would violate the regulatory standard; and continuing use of the network communication channel using the mitigation feature.

Example 5 includes the subject matter of example 1, where the set of attributes are determined to indicate that continued use of the network communication channel is acceptable under the regulatory standard based on the set of decision trees, and the method further includes continuing use of the network communication channel based on determining that use of the network communication channel is acceptable under the regulatory standard.

Example 6 includes the subject matter of any one of examples 1-5, where the set of decision trees includes a plurality of different decision trees.

Example 7 includes the subject matter of any one of examples 1-6, where the regulatory standard includes a standard of Articles 3(3) of the European Radio Equipment Directive (RED) on Cybersecurity and Privacy.

Example 8 includes the subject matter of any one of examples 1-7, where the network communication channel includes a wireless communication channel.

Example 9 includes the subject matter of any one of examples 1-7, where the network communication channel includes a wired communication channel.

Example 10 includes the subject matter of any one of examples 1-9, where determining whether use of the network communication channel complies with the regulatory standard includes using the set of attributes to walk each decision tree in the set of decision tree to determine whether compliance with the regulatory standard is satisfied or not.

Example 11 includes the subject matter of any one of examples 1-10, where the set of decision trees includes a particular decision tree to determine whether intended use of an interface used in the network communication channel is in compliance with an acceptable use as defined in the regulatory standard, and the particular decision tree includes a node to determine whether the network communication channel involves an untrusted network.

Example 12 includes the subject matter of any one of examples 1-11, where the network communication channel couples to a particular networking device, and the method further includes: determining whether a prior connection has been made with the particular networking device; and implementing an abbreviated interface handshake with the particular networking device based on determining that a prior connection has been made with the particular networking device.

Example 13 includes the subject matter of any one of examples 1-12, where the response data further includes authentication data to attest to trustworthiness of at least a portion of the set of attributes identified in the response data.

Example 14 includes the subject matter of any one of examples 1-13, further including: identifying data describing prior validation of a radio frequency device with the regulatory standard, where determining whether use of the network communication channel complies with the regulatory standard is based at least in part on attributes of the prior validation.

Example 15 is an apparatus including: radio equipment to couple to one or more other devices over one or more wireless networks; and regulatory compliance logic, executable by a processor to perform the method of any one of examples 1-14.

Example 16 includes the subject matter of example 15, including a wireless access point.

Example 17 includes the subject matter of example 15, including user equipment to communicate wirelessly using one or more wireless communication technologies.

Example 18 includes the subject matter of example 15, including a RAN node.

Example 19 is a non-transitory machine-readable storage medium with instructions stored thereon, the instruction executable by a machine to cause the machine to: identify a particular device accessible over a network communication channel; identify that a regulatory standard applies to the network communication channel; send a request, over the network communication channel, for regulatory compliance information from the particular device based on the regulatory standard; receive response data to the request from the particular device over the network communication channel, where the response data identifies a set of attributes associated with one or more of the network communication channel or the particular device, and the set of attributes are associated with a set of one or more decision trees defined by the regulatory standard to indicate compliance of radio equipment devices with the regulatory standard; and determine, based on the set of attributes and the set of decision trees, whether use of the network communication channel complies with the regulatory standard.

Example 20 includes the subject matter of example 19, where the set of attributes are determined to indicate that continued use of the network communication channel would violate the regulatory standard based on the set of decision trees.

Example 21 includes the subject matter of example 20, where the method further includes sending a message to the particular device to terminate the network communication channel based on determining that continued use of the network communication channel would violate the regulatory standard.

Example 22 includes the subject matter of example 20, where the method further includes: identifying a mitigation feature to mitigate violation of the regulatory standard based on at least one of the set of decision trees or the set of attributes; activating the mitigation feature based on determining that continued use of the network communication channel would violate the regulatory standard; and continuing use of the network communication channel using the mitigation feature.

Example 23 includes the subject matter of example 19, where the set of attributes are determined to indicate that continued use of the network communication channel is acceptable under the regulatory standard based on the set of decision trees, and the method further includes continuing use of the network communication channel based on determining that use of the network communication channel is acceptable under the regulatory standard.

Example 24 includes the subject matter of any one of examples 19-23, where the set of decision trees includes a plurality of different decision trees.

Example 25 includes the subject matter of any one of examples 19-24, where the regulatory standard includes a standard of Articles 3(3) of the European Radio Equipment Directive (RED) on Cybersecurity and Privacy.

Example 26 includes the subject matter of any one of examples 19-25, where the network communication channel includes a wireless communication channel.

Example 27 includes the subject matter of any one of examples 19-26, where the network communication channel includes a wired communication channel.

Example 28 includes the subject matter of any one of examples 19-27, where determining whether use of the network communication channel complies with the regulatory standard includes using the set of attributes to walk each decision tree in the set of decision tree to determine whether compliance with the regulatory standard is satisfied or not.

Example 29 includes the subject matter of any one of examples 19-28, where the set of decision trees includes a particular decision tree to determine whether intended use of an interface used in the network communication channel is in compliance with an acceptable use as defined in the regulatory standard, and the particular decision tree includes a node to determine whether the network communication channel involves an untrusted network.

Example 30 includes the subject matter of any one of examples 19-29, where the network communication channel couples to a particular networking device, and the method further includes: determining whether a prior connection has been made with the particular networking device; and implementing an abbreviated interface handshake with the particular networking device based on determining that a prior connection has been made with the particular networking device.

Example 31 includes the subject matter of any one of examples 19-30, where the response data further includes authentication data to attest to trustworthiness of at least a portion of the set of attributes identified in the response data.

Example 32 includes the subject matter of any one of examples 19-31, further including: identifying data describing prior validation of a radio frequency device with the regulatory standard, where determining whether use of the network communication channel complies with the regulatory standard is based at least in part on attributes of the prior validation.

Example 33 is a system including means to perform the method of any one of examples 1-13.

Example 34 is a system including the apparatus of example 15.

Example 35 includes the subject matter of example 34, further including a processor to execute the regulatory compliance logic.

Example 36 includes the subject matter of example 34, where the regulatory compliance logic is implemented at least in part in hardware circuitry.

Example 37 includes the subject matter of any one of examples 34-36, further including a memory to store decision tree describing the set of decision trees and for use in determining whether use of the network communication channel complies with the regulatory standard.

Any of the above-described examples may be combined with any other example (or combination of examples), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

## Claims

1. A method comprising:
identifying a particular device accessible over a network communication channel;
identifying that a regulatory standard applies to the network communication channel;
sending a request, over the network communication channel, for regulatory compliance information from the particular device based on the regulatory standard;
receiving response data to the request from the particular device over the network communication channel, wherein the response data identifies a set of attributes associated with one or more of the network communication channel or the particular device, and the set of attributes are associated with a set of one or more decision trees defined by the regulatory standard to indicate compliance of radio equipment devices with the regulatory standard; and
determining, based on the set of attributes and the set of decision trees, whether use of the network communication channel complies with the regulatory standard.

2. The method of Claim 1, wherein the set of attributes are determined to indicate that continued use of the network communication channel would violate the regulatory standard based on the set of decision trees.

3. The method of Claim 2, wherein the method further comprises sending a message to the particular device to terminate the network communication channel based on determining that continued use of the network communication channel would violate the regulatory standard.

4. The method of Claim 2, wherein the method further comprises:
identifying a mitigation feature to mitigate violation of the regulatory standard based on at least one of the set of decision trees or the set of attributes;
activating the mitigation feature based on determining that continued use of the network communication channel would violate the regulatory standard; and
continuing use of the network communication channel using the mitigation feature.

5. The method of Claim 1, wherein the set of attributes are determined to indicate that continued use of the network communication channel is acceptable under the regulatory standard based on the set of decision trees, and the method further comprises continuing use of the network communication channel based on determining that use of the network communication channel is acceptable under the regulatory standard.

6. The method of any one of Claims 1-5, wherein the set of decision trees comprises a plurality of different decision trees.

7. The method of any one of Claims 1-6, wherein the regulatory standard comprises a standard of Articles 3(3) of European Radio Equipment Directive (RED) on Cybersecurity and Privacy.

8. The method of any one of Claims 1-7, wherein the network communication channel comprises a wireless communication channel.

9. The method of any one of Claims 1-7, wherein the network communication channel comprises a wired communication channel.

10. The method of any one of Claims 1-9, wherein determining whether use of the network communication channel complies with the regulatory standard comprises using the set of attributes to walk each decision tree in the set of decision tree to determine whether compliance with the regulatory standard is satisfied or not.

11. The method of any one of Claims 1-10, wherein the set of decision trees comprises a particular decision tree to determine whether intended use of an interface used in the network communication channel is in compliance with an acceptable use as defined in the regulatory standard, and the particular decision tree comprises a node to determine whether the network communication channel involves an untrusted network.

12. The method of any one of Claims 1-11, wherein the network communication channel couples to a particular networking device, and the method further comprises:
determining whether a prior connection has been made with the particular networking device; and
implementing an abbreviated interface handshake with the particular networking device based on determining that a prior connection has been made with the particular networking device.

13. The method of any one of Claims 1-12, wherein the response data further comprises authentication data to attest to trustworthiness of at least a portion of the set of attributes identified in the response data.

14. The method of any one of Claims 1-13, further comprising:
identifying data describing prior validation of a radio frequency device with the regulatory standard, wherein determining whether use of the network communication channel complies with the regulatory standard is based at least in part on attributes of the prior validation.

15. An apparatus comprising:
radio equipment to couple to one or more other devices over one or more wireless networks; and
regulatory compliance logic, executable by a processor to perform the method of any one of Claims 1-14.
